(19) Europäisches Patentamt
European Patent Office
Office européen des brevets

(11) **EP 2 121 225 B1**

(12) **FASCICULE DE BREVET EUROPEEN**

(45) Date de publication et mention
de la délivrance du brevet:
**07.09.2011 Bulletin 2011/36**

(51) Int Cl.:
***B23B 49/02*** *(2006.01)* ***B21J 15/02*** *(2006.01)*

(21) Numéro de dépôt: **08716866.2**

(86) Numéro de dépôt international:
**PCT/EP2008/051855**

(22) Date de dépôt: **15.02.2008**

(87) Numéro de publication internationale:
**WO 2008/101873 (28.08.2008 Gazette 2008/35)**

(54) **PROCEDE D'ASSEMBLAGE DE DEUX ENSEMBLES, TELS QUE DES ENSEMBLES DE FUSELAGE D'AERONEF**

VERFAHREN ZUR MONTAGE ZWEIER ANORNDNUNGEN WIE ETWA FLUGZEUGRUMPFANORDNUNGEN

METHOD FOR ASSEMBLING TWO ASSEMBLIES SUCH AIRCRAFT FUSELAGE ASSEMBLIES

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **16.02.2007 FR 0753303**

(43) Date de publication de la demande:
**25.11.2009 Bulletin 2009/48**

(73) Titulaire: **Airbus Operations**
**31060 Toulouse (FR)**

(72) Inventeurs:
• **HOUIS, Jean-Luc**
**F-44630 Plesse (FR)**
• **COHEN BACRI, Gérard**
**F-44550 Montoir De Bretagne (FR)**

(74) Mandataire: **Ilgart, Jean-Christophe**
**BREVALEX**
**95 rue d'Amsterdam**
**75378 Paris Cedex 8 (FR)**

(56) Documents cités:
**EP-A1- 0 761 351    FR-A1- 2 562 179**

## Description

### DOMAINE TECHNIQUE

La présente invention se rapporte de façon générale à un procédé d'assemblage de deux ensembles, par exemple par rivetage.

L'invention s'applique de préférence mais non exclusivement à l'assemblage de deux ensembles constitutifs d'un fuselage d'aéronef. Plus précisément, il peut s'agit d'un procédé d'assemblage dit de couture, c'est-à-dire visant à l'assemblage par la pose d'organes de fixation à sertir de type « lockbolt » ou rivet, le long d'une interface commune aux deux ensembles, dite zone de recouvrement ou zone de jonction.

A titre indicatif, on distingue généralement les coutures dites orbitales adaptées à l'assemblage de deux ensembles, appelés dans ce cas « tronçons », de forme approximativement cylindrique, des coutures dites longitudinales correspondant à l'assemblage de deux ensembles dont la forme est sensiblement celle d'un demi-cylindre. Les coutures longitudinales sont réalisées selon des génératrices de la section courante, tandis que les coutures orbitales sont quant à elles réalisées dans une zone d'interface comprise entre deux sections transversales du fuselage, ces deux types de coutures pouvant être réalisées respectivement selon des génératrices longitudinales non linéaires et selon des génératrices transversales non circulaires lorsque ces assemblages sont réalisés sur des parties de fuselage situées en pointe avant ou en extrémité arrière de l'aéronef, là où la forme du fuselage présente une double courbures.

Le procédé selon l'invention est susceptible de s'appliquer pour la jonction d'une zone de recouvrement présentant une simple courbure ou une double courbures. A titre informatif, les panneaux à simple courbure sont dits « développables », et présentent une génératrice rectiligne impliquant qu'ils peuvent être « déroulés » sur un plan. En revanche, les panneaux à double courbures, tels que les panneaux de fuselage du cockpit d'un aéronef, ne sont pas « développables » et ne disposent donc pas de génératrice rectiligne, c'est-à-dire qu'ils ne peuvent pas être « déroulés » sur un plan. Effectivement, ils présentent une première courbure, par exemple dans la direction longitudinale du panneau, ainsi qu'une seconde courbure distincte de la première, par exemple dans la direction transversale de ce même panneau.

### ETAT DE LA TECHNIQUE ANTERIEURE

Dans le domaine de l'assemblage d'ensembles de fuselage d'aéronef, les ensembles à solidariser par l'intermédiaire d'une couture de rivets ou de « lockbolts » sont généralement de grande dimension, à savoir disposant chacun d'une volume de plusieurs mètres cube. De plus, les tolérances relatives au montage en interférence des organes de fixation sont très serrées, en général de quelques centièmes de millimètre seulement, de sorte qu'il est extrêmement difficile de pré-percer les panneaux destinés à former la zone de recouvrement des deux ensembles, tout en assurant la coaxialité de chacun des trous dans la tolérance d'interférence. Par conséquent, les procédés d'assemblage sont généralement mis en oeuvre de sorte que les deux ensembles soient percés au cours de la même opération de perçage, afin d'obtenir au cours de cette même opération un unique orifice de logement d'organe de fixation, formé par les deux trous respectivement obtenus à travers les deux panneaux au moins partiellement superposés.

La difficulté réside alors dans le fait que l'interface d'assemblage doit normalement être exempte de toute bavure et de tout copeaux sous peine de réduire les caractéristiques de tenue en fatigue du fuselage ainsi assemblé. De plus, pour assurer l'étanchéité de l'interface entre les ensembles, indispensable au maintien de la pressurisation du fuselage en vol, celle-ci est garnie d'une fine couche d'un mastic d'étanchéité, ou mastic d'interposition. En outre, afin d'assurer la continuité mécanique de transmission des efforts dans le fuselage, il est fait en sorte que le contact entre les deux ensembles au niveau de chaque organe de fixation soit un contact métal-métal, c'est à dire qu'il n'y ait pas de couplage d'effort à travers le mastic d'interposition.

Afin d'assurer ces différentes conditions, il est connu d'opérer les étapes successives suivantes :

- la mise en référence préalable des deux ensembles, prévue pour amener ces deux ensembles dans le positionnement relatif déterminé, ces deux ensembles ainsi positionnés formant conjointement la zone de recouvrement ;
- le perçage de trous de montage à travers la zone de recouvrement, pour la fixation ultérieure de grille de perçage ;
- la fixation d'une ou plusieurs grilles de perçage sur la zone de recouvrement par l'intermédiaire de moyens de fixation provisoires coopérant avec les trous de montage ;
- le perçage des orifices à travers la zone de recouvrement, à l'aide d'un outil de perçage destiné à coopérer avec chaque grille de perçage, le perçage d'effectuant par exemple à l'aide d'un outil tel que celui connu du document EP 0 761 345;
- le démontage des grilles de perçage et le désassemblage des deux ensembles afin de réaliser un nettoyage et un ébavurage des panneaux au niveau des orifices et des trous de montage ;
- l'application de mastic d'interposition sur les panneaux des ensembles destinés à former la zone de recouvrement ;
- la mise en référence des deux ensembles, prévue pour amener à nouveau ces deux ensembles dans le positionnement relatif déterminé permettant la mise en place des organes de fixation, les deux ensembles ainsi positionnés formant conjointement la zone de recouvrement présentant une couche de mastic d'interposition entre les deux panneaux de cette zone ; et

- la mise en place des organes de fixation dans leurs orifices respectifs.

Avec cette façon de procéder, tant les opérations de désassemblage / d'éclatement et de réassemblage des ensembles, que les opérations de nettoyage / ébavurage de ces derniers, allongent considérablement le cycle de fabrication, rendant celui-ci coûteux et non optimisé. Pour éviter l'apparition de telles bavures au niveau de la zone de recouvrement / jonction entre les deux panneaux devant être percés au cours de la même opération, une solution connue de l'art antérieur consiste à appliquer une force de serrage déterminée entre ces deux panneaux. Plus précisément, la pression désirée est telle qu'elle permet de générer un effort sur la zone de recouvrement qui empêche d'une part l'apparition de bavures, d'autre part l'insertion de copeaux à l'interface des panneaux assemblés, enduits de mastic d'interposition.

Néanmoins, les moyens généralement utilisés pour réaliser cette pression sont complexes et difficiles à mettre en place sur les ensembles à solidariser par couture, ce qui constitue une autre source de pénalisation du cycle de fabrication. A ce titre, pour des raisons d'encombrement, il est relativement difficile de monter ces moyens de mise en pression lors de l'utilisation de grilles de perçage, pourtant couramment utilisées dans le domaine considéré. Surtout, il est habituellement difficile voire impossible de les mettre en place sur des zones de recouvrement de formes complexes, telles que les zones de recouvrement à double courbures, ou encore sur des ensembles formant des structures dites « fermées » où l'accès reste délicat. Enfin, ces moyens de mise en pression connus de l'art antérieur sont essentiellement conçus pour être employés dans le cadre d'un procédé d'assemblage entièrement automatisé, mais aucunement adaptés à un assemblage manuel, par exemple dans lequel l'opérateur réalise manuellement le perçage des orifices ainsi que la mise en place des organes de fixation, à l'aide d'outils appropriés.

## EXPOSÉ DE L'INVENTION

L'invention a donc pour but de proposer un procédé d'assemblage remédiant aux problèmes mentionnés ci-dessus, relatifs aux réalisations de l'art antérieur. Plus précisément, le but de l'invention est de fournir un procédé d'assemblage permettant d'appliquer d'une façon simple la pression requise sur la zone de recouvrement lors du perçage des orifices à travers cette même zone, afin d'empêcher d'une part l'apparition de bavures, et d'autre part l'insertion de copeaux à l'interface des panneaux assemblés, habituellement enduits de mastic d'interposition.

Pour ce faire, l'invention a pour objet un procédé d'assemblage de deux ensembles par l'intermédiaire d'une pluralité d'organes de fixation destinés à établir une jonction entre deux panneaux au moins partiellement superposés appartenant respectivement aux deux ensembles et formant conjointement une zone de recouvrement, le procédé comprenant le perçage d'une pluralité d'orifices à travers la zone de recouvrement, chacun des orifices étant destiné à loger l'un des organes de fixation, le perçage de chaque orifice étant réalisé à l'aide d'un outil de perçage traversant un orifice de centrage correspondant pratiqué sur une grille de perçage montée fixement sur la zone de recouvrement, l'outil de perçage comprenant un mandrin d'appui sur la zone de recouvrement ainsi qu'une bague expansible épousant le mandrin selon une surface de contact conique permettant, lors de l'application d'un mouvement relatif selon un axe central de surface de contact conique entre le mandrin et la bague, une expansion de cette bague assurant son blocage dans l'orifice de centrage correspondant (EP 0761351).

Selon l'invention, l'application du mouvement relatif entre la bague expansible et le mandrin d'appui est réalisée de manière à engendrer, suite au blocage de la bague expansible dans l'orifice de centrage correspondant, un déplacement du mandrin en appui contre la zone de recouvrement, à travers l'orifice de centrage correspondant et selon l'axe central de surface de contact conique en direction de cette zone de recouvrement afin d'exercer une pression sur celle-ci.

Ainsi, l'invention prévoit effectivement une solution simple et astucieuse permettant d'appliquer facilement la pression requise sur la zone de recouvrement lors du perçage des orifices à travers cette même zone, afin d'empêcher d'une part l'apparition de bavures, et d'autre part l'insertion de copeaux à l'interface des panneaux assemblés, généralement enduits de mastic d'interposition.

En effet, l'outil de perçage employé peut être du type classiquement connu de l'homme du métier, tel que celui fabriqué par la société Cooper Power Tools et désigné « P2 Drill with Concentric Collet Foot ». Ce type d'outil de perçage est également décrit dans le document EP 0 761 351 A, qui est inclus ici par référence.

Il est noté que si les moyens employés pour obtenir la pression sur la zone de recouvrement durant le perçage des orifices sont connus de l'art antérieur, la spécificité de l'invention réside dans l'utilisation particulière qui est faite de ces moyens. Effectivement, dans les outils de perçage tels que ceux indiqués ci-dessus, la présence du mandrin d'appui et de sa bague expansible associée est motivée par l'unique nécessité de bloquer cet outil en rotation et en translation dans un orifice de centrage de la grille de perçage, par friction entre la bague et ce même orifice de centrage. Pour ce faire, la bague est mise en mouvement selon l'axe central de surface de contact conique entre celle-ci et le mandrin, à travers l'orifice de centrage correspondant et dans une direction opposée à la zone de recouvrement contre laquelle le mandrin, immobile par rapport à l'orifice de centrage, reste en appui. Ce mouvement est stoppé lorsque l'expansion de la bague dans l'orifice de la grille est suffisante pour bloquer l'outil en rotation et en translation par rapport à cette grille.

En revanche, dans l'invention, on fait en sorte que le mouvement relatif appliqué entre la bague et le mandrin se traduise essentiellement par un mouvement du mandrin dans la direction de la zone de recouvrement, et non pas par un mouvement de la bague dans la direction opposée à celle de la zone de recouvrement, même si ce dernier mouvement peut être observé jusqu'à l'obtention d'un véritable blocage de la bague dans l'orifice de centrage de la grille de perçage. A cet égard, l'application du mouvement relatif entre la bague expansible et le mandrin d'appui est préférentiellement réalisée de manière à engendrer un déplacement du mandrin en appui contre la zone de recouvrement et à travers l'orifice de centrage correspondant, sur une distance $(x2)$ respectant la condition $(x2) > 0,90.(x)$, où $(x)$ correspond à une distance totale du mouvement relatif appliqué entre la bague et le mandrin. La relation précitée traduit effectivement la volonté d'obtenir essentiellement un mouvement du mandrin à travers l'orifice de centrage plutôt qu'un mouvement de la bague à travers ce même orifice de centrage dans un sens opposé. L'homme du métier sera naturellement en mesure d'adapter la conception des différents éléments en question pour aboutir à un tel fonctionnement, notamment en dimensionnant de façon appropriée le diamètre nominal de la bague expansible et celui de l'orifice de centrage. A cet égard, il est noté qu'un faible jeu initial entre la bague et l'orifice de centrage correspondant, par exemple inférieur à 0,5 mm, et de préférence de l'ordre de 0,3 mm, est requis pour obtenir le blocage de la bague dans ce même orifice de perçage extrêmement rapidement après le début de l'application du mouvement relatif, ce jeu étant néanmoins suffisant pour assurer une introduction aisée de la bague expansible dans l'orifice de centrage avant perçage. A ce titre, il a été constaté que l'application de tolérances H7 à H10 pour les orifices de centrage des grilles de perçage, mais de préférence H7, pouvait s'avérer efficace pour l'obtention de l'effet désiré ci-dessus.

En outre, l'application du mouvement relatif entre la bague expansible et le mandrin d'appui est réalisée de manière à engendrer, en fin d'application, une pression de mandrin d'appui, sur la zone de recouvrement, comprise entre environ 600 et 1200 N. Comme cela sera décrit ci-après, la conception des moyens particuliers employés pour effectuer une telle pression permettent de déterminer préalablement la pression qui sera exercé lors de l'application du mouvement relatif, en fonction de différents paramètres connus.

Quoi qu'il en soit, cette valeur de pression est donc tout à fait appropriée pour empêcher d'une part l'apparition de bavures, et d'autre part l'insertion de copeaux à l'interface des panneaux assemblés, généralement enduits de mastic d'interposition. Par conséquent, il est alors avantageusement possible d'effectuer tous les perçages d'orifices sur la zone de recouvrement / jonction lors d'une même étape de perçage, suivie de la mise en place de tous les organes de fixation, sans avoir à désassembler / réassembler les ensembles préalablement mis en référence, dans le repère de l'aéronef lorsqu'il s'agit d'ensembles de fuselage.

Un tel procédé dans lequel l'ensemble des perçages sont effectués, suivis de l'ensemble de la pose et du sertissage des organes de fixation, présente l'avantage d'être très flexible en termes de main d'oeuvre. En effet, une personne seule peut réaliser l'ensemble des étapes nécessaires à l'obtention de la couture, car à aucun moment il n'est nécessaire d'accéder en même temps des deux côtés du fuselage, que ce soit pour l'installation des outillages, le perçage-fraisurage, le démontage des outillages, ou encore la pose et le sertissage des organes de fixation.

D'autre part, ce type de procédé selon l'invention permet également de faire intervenir plusieurs opérateurs tant à l'extérieur qu'à l'intérieur du fuselage, de manière à réduire le temps de réalisation des coutures. De ce fait, il est notable que le procédé objet de l'invention offre une grande flexibilité en terme d'organisation du travail pour une même couture en fonction des cadences de production exigées, contrairement par exemple aux procédés de l'art antérieur dit avec « éclatement », du fait du point de regroupement lié à ce même éclatement / déassemblage des deux ensembles après perçage.

L'invention propose donc une solution simple permettant une mise en place facile et rapide des moyens de mise en pression de la zone de recouvrement, étant donné qu'elle est assimilable à une simple mise en place de l'outil de perçage par rapport à la grille de perçage correspondante. Le cycle de fabrication est donc grandement optimisé. De plus, il apparaît clairement que la solution adoptée ne présente aucun inconvénient en terme d'encombrement contrairement à ce qui était rencontré dans l'art antérieur, étant donné que les moyens de mise en pression sont constitués par l'outil de perçage lui-même.

De plus, cette manière astucieuse de réaliser la pression lors du perçage des orifices autorise facilement la réalisation de coutures sur des zones de recouvrement de formes complexes, telles que les zones de recouvrement à double courbures, ou encore sur des ensembles formant des structures dites « fermées », étant donné que seul l'accès à un unique côté de la structure s'avère nécessaire pour la mise en place de l'outil de perçage générant la pression requise. En outre, l'invention est aussi bien applicable à un procédé automatisé qu'à un procédé réalisé au moins partiellement manuellement, par exemple du type dans lequel l'opérateur réalise manuellement le perçage des orifices ainsi que la mise en place des organes de fixation, à l'aide d'outils appropriés.

Enfin, il est bien entendu que le procédé selon l'invention permet la réalisation des coutures dites orbitales adaptées à l'assemblage de deux ensembles de forme approximativement cylindrique, ainsi que celle des coutures dites longitudinales correspondant à l'assemblage de deux ensembles dont la forme est sensiblement celle d'un demi-cylindre.

De préférence, la grille de perçage est réalisée en aluminium ou dans l'un de ses alliages, et la bague expansible est réalisée en acier.

En effet, il est noté que les grilles de perçage doivent de préférence pouvoir assurer l'ensembles des fonctions suivantes :

- l'immobilisation de l'outil de perçage en rotation et en translation dans l'orifice de centrage correspondant, et ceci uniquement par la force de friction de la bague expansible dans l'orifice de la grille ;
- une durée de vie suffisante de la grille ; et
- un positionnement correct des orifices de centrage par rapport aux ensembles à assembler, quelques soient les conditions environnantes, notamment lors des variations de température au cours de l'assemblage.

Afin de satisfaire à cette dernière fonction, l'emploi de l'aluminium ou de l'un de ses alliages apparaît tout à fait adéquat, en particulier lorsque les ensembles sont réalisés dans un matériau identique ou similaire, tel que cela est habituellement le cas pour les ensembles de fuselage d'aéronef. En effet, les grilles de perçage peuvent alors se dilater thermiquement de la même manière que le fuselage en alliage d'aluminium.

Alternativement, il peut être avantageux de réaliser ces grilles de perçage à partir d'un matériau composite à renfort carbone, dans le cas d'un fuselage constitué d'un tel matériau ou similaire. Cette constitution des grilles offre en outre l'avantage de les rendre plus légères et ainsi d'en faciliter la manipulation par les opérateurs. Cependant, ces matériaux présentent une résistance à l'usure relativement faible, susceptible d'être incompatible avec les exigences élevées relatives à la durée de vie de telles grilles, prévues pour l'introduction répétée d'une bague expansible dans chaque orifice de centrage.

Ainsi, pour faire face à ce problème d'usure, une autre solution pouvant être retenue consiste à chemiser par une bague en acier les orifices de centrage de la grille, elle-même réalisée en aluminium ou dans l'un de ses alliages, ou encore à partir d'un matériau composite à renfort carbone. Néanmoins, la première solution indiquée ci-dessus est préférentiellement retenue étant donné que le frottement entre l'aluminium de la grille et l'acier de la bague est près de deux fois plus élevé qu'un frottement acier-acier, ce qui permet de faciliter le blocage en rotation et translation de la bague expansible par rapport à la grille de perçage.

Cependant, cette solution préférée présente une moindre résistance à l'usure. A cet égard, il apparaît que l'usure des grilles reste largement acceptable dès lors que celle-ci est uniforme le long de la surface de contact entre la bague et l'orifice de centrage. Pour que cette condition soit vérifiée, mais aussi pour éviter une usure plus marquée en entrée et en sortie d'orifice de centrage, il est préférentiellement recherché la pus grande surface de contact possible entre la bague et cet orifice de centrage. Pour ce faire, la grille de perçage est conçue et agencée de sorte que préalablement à l'application du mouvement relatif entre la bague expansible et le mandrin d'appui, lorsque l'outil de perçage est positionné avec son mandrin d'appui traversant l'orifice de centrage correspondant et en contact avec la zone de recouvrement, la bague d'expansion fasse saillie de part et d'autre de l'orifice de centrage correspondant. Cette position préférée doit également préférentiellement être conservée jusqu'au blocage de la bague dans l'orifice de centrage.

Ainsi, on fait de préférence en sorte que l'épaisseur des grilles soit légèrement inférieure à la longueur de la bague expansible selon l'axe central de surface de contact conique. L'écartement initial de la grille par rapport à la zone de recouvrement à assembler est également prévu en conséquence.

Préférentiellement, le procédé comprend une étape de mise en référence des deux ensembles, prévue pour amener ces deux ensembles dans un positionnement relatif déterminé permettant la réalisation du perçage des orifices. Dans un tel cas, le perçage des orifices et une étape ultérieure de mise en place des organes de fixation dans leurs orifices respectifs sont réalisés successivement en conservant le positionnement relatif déterminé obtenu lors de l'étape de mise en référence des deux ensembles, ce qui évite la réalisation d'un éclatement des deux ensembles après perçage, coûteux en terme de durée de cycle de fabrication.

Préférentiellement, le procédé comporte les étapes successives suivantes, réalisées en conservant le positionnement relatif déterminé obtenu lors de l'étape de mise en référence des deux ensembles :

- la fixation d'une ou plusieurs grilles de perçage sur la zone de recouvrement, chaque grille de perçage étant pourvue d'une pluralité d'orifices de centrage ;
- le perçage des orifices à travers la zone de recouvrement, à l'aide de l'outil de perçage destiné à coopérer avec chaque grille de perçage ;
- le démontage de chaque grille de perçage ;
- la mise en place des organes de fixation dans leurs orifices respectifs.

Plus précisément, selon un premier mode de réalisation préféré de la présente invention, le procédé comporte les étapes successives suivantes :

- la mise en référence des deux ensembles, prévue pour amener ces deux ensembles dans le positionnement relatif déterminé permettant la réalisation du perçage des orifices, les deux ensembles ainsi positionnés formant conjointement la zone de recouvrement présentant une couche de mastic d'interposition entre les deux panneaux de cette zone ;
- la mise en place d'un ou plusieurs premiers dispositifs de mise en pression sur un premier côté de la zone de recouvrement, et, la mise en place d'un ou plusieurs seconds dispositifs de mise en pression sur un second côté de la zone de recouvrement, opposé au premier côté ;
- le perçage de trous de montage à travers la zone de recouvrement, pour la fixation de grille de perçage, chaque trou de montage étant réalisé à proximité d'au moins un premier dispositif de mise en pression et d'au moins un second dispositif de mise en pression ;

- le démontage de chaque premier dispositif de mise en pression ;
- la fixation d'une ou plusieurs grilles de perçage sur la zone de recouvrement, du premier côté de celle-ci, par l'intermédiaire de moyens de fixation provisoires coopérant avec les trous de montage ;
- le perçage des orifices à travers la zone de recouvrement, depuis le premier côté de la zone de recouvrement, à l'aide de l'outil de perçage destiné à coopérer avec chaque grille de perçage, chaque orifice étant réalisé à proximité d'au moins un second dispositif de mise en pression ;
- la mise en place d'organes de fixation provisoires chacun traversant l'un des orifices pratiqués dans la zone de recouvrement, ainsi que son orifice de centrage correspondant pratiqué sur la grille de perçage ;
- le démontage de chaque grille de perçage, et des moyens de fixation provisoires ;
- le démontage de chaque second dispositif de mise en pression ;
- la mise en place des organes de fixation dans leurs orifices respectifs, cette mise en place étant effectuée en conservant le positionnement relatif déterminé obtenu lors de l'étape de mise en référence des deux ensembles ; et
- la mise en place d'organes de fixation annexes dans lesdits trous de montage.

Alternativement, selon un second mode de réalisation préféré de la présente invention, le procédé comporte les étapes successives suivantes :

- une mise en référence préalable des deux ensembles, prévue pour amener ces deux ensembles dans le positionnement relatif déterminé, les deux ensembles ainsi positionnés formant conjointement la zone de recouvrement ;
- le perçage de trous de montage à travers la zone de recouvrement, pour la fixation ultérieure de grille de perçage ;
- le désassemblage des deux ensembles afin de réaliser un nettoyage et un ébavurage des panneaux au niveau des trous de montage ;
- la mise en référence des deux ensembles, prévue pour amener à nouveau ces deux ensembles dans le positionnement relatif déterminé permettant la réalisation du perçage des orifices, les deux ensembles ainsi positionnés formant conjointement la zone de recouvrement présentant une couche de mastic d'interposition entre les deux panneaux de cette zone ;
- la mise en place d'un ou plusieurs seconds dispositifs de mise en pression sur un second côté de la zone de recouvrement, opposé à un premier côté ;
- la fixation d'une ou plusieurs grilles de perçage sur la zone de recouvrement, du premier côté de celle-ci, par l'intermédiaire de moyens de fixation provisoires coopérant avec les trous de montage ;
- le perçage des orifices à travers la zone de recouvrement, depuis le premier côté de la zone de recouvrement, à l'aide de l'outil de perçage destiné à coopérer avec chaque grille de perçage, chaque orifice étant réalisé à proximité d'au moins un second dispositif de mise en pression ;
- la mise en place d'organes de fixation provisoires chacun traversant l'un des orifices pratiqués dans la zone de recouvrement, ainsi que son orifice de centrage correspondant pratiqué sur la grille de perçage ;
- le démontage de chaque grille de perçage, et des moyens de fixation provisoires ;
- le démontage de chaque second dispositif de mise en pression ;
- la mise en place des organes de fixation dans leurs orifices respectifs, cette mise en place étant effectuée en conservant le positionnement relatif déterminé obtenu lors de l'étape de mise en référence des deux ensembles ; et
- la mise en place d'organes de fixation annexes dans les trous de montage.

Dans ce second mode de réalisation préféré, dans lequel on procède donc à un éclatement des ensembles avant d'effectuer les perçages des orifices destinés à loger les organes de fixation, il n'est alors plus nécessaire de procéder au montage / démontage des premiers dispositifs de mise en pression, également dits dispositifs de bridage, tels que ceux employés dans le premier mode de réalisation préféré, ce qui permet de réduire le temps de cycle, même si celui-ci intègre un nettoyage et un ébavurage des panneaux au niveau des trous de montage réalisés, après l'éclatement des ensembles à assembler.

De préférence, les organes de fixation sont des rivets ou des « lockbolts ». A titre indicatif, comme cela est connu de l'homme du métier, les organes de fixation de type « lockbolt » sont notamment connus du brevet US 3 203 300. Ils peuvent néanmoins prendre toute autre forme en conservant le principe d'expansion par traction de tige, et de compression par bague, sans sortir du cadre de l'invention.

Toujours de manière préférentielle et tel que cela a été indiqué ci-dessus, le procédé s'applique pour l'assemblage d'ensembles de fuselage d'aéronef, tels que ceux constitutifs des parties de fuselage situées en pointe avant ou en extrémité arrière de l'aéronef, là ou la forme du fuselage présente une double courbures.

Ainsi, le procédé est préférentiellement mis en oeuvre de sorte que les organes de fixation forment conjointement une couture dite orbitale.

D'autres avantages et caractéristiques de l'invention apparaîtront dans la description détaillée non limitative ci-dessous.

**BRÈVE DESCRIPTION DES DESSINS**

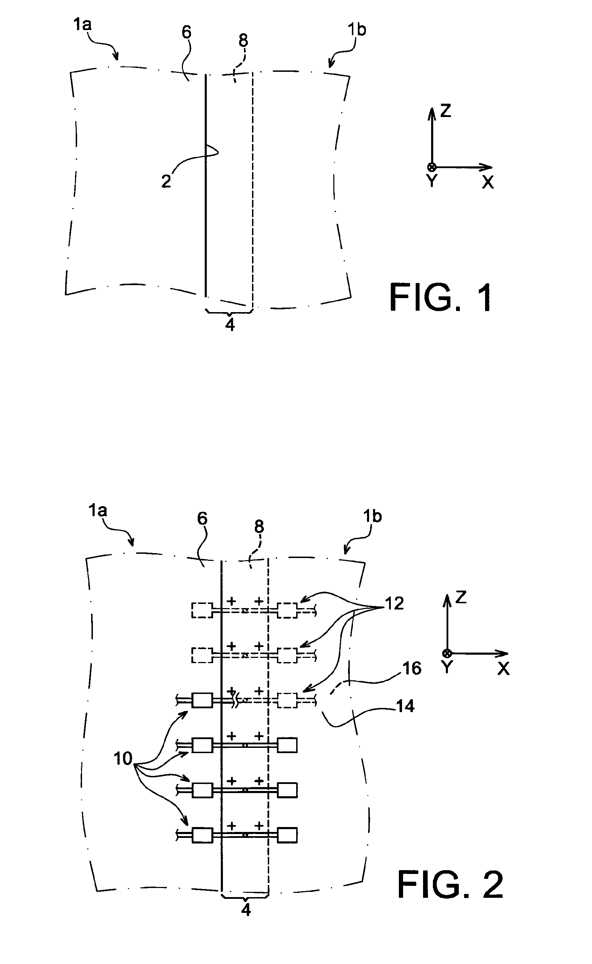

Cette description sera faite au regard des dessins annexés parmi lesquels les figures 1 à 14 illustrent un mode de réalisation préféré du procédé d'assemblage selon la présente invention.

**EXPOSÉ DÉTAILLÉ D'UN MODE DE RÉALISATION PRÉFÉRÉ**

En référence tout d'abord à la figure 1, on peut voir deux ensembles 1a, 1b destinés à être assembler par couture dite orbitale, à l'aide de rivets, et par la mise en oeuvre d'un procédé selon un mode de réalisation préféré de la présente invention, qui va à présent être décrit. Il s'agit ici de deux ensembles 1a, 1b constituant respectivement deux tronçons transversaux du fuselage d'un aéronef, de préférence situés en pointe avant ou en extrémité arrière de l'aéronef, là où la forme du fuselage présente une double courbures.

Dans ce mode de réalisation préféré, le procédé débute, comme montré sur cette figure 1, par la mise en référence des deux ensembles 1a, 1b, prévue pour amener ceux-ci dans un positionnement relatif déterminé dans le repère de l'aéronef, symbolisé ici par le repère X, Y, Z. La mise en référence est telle qu'elle conduit à la formation d'une zone de recouvrement 4, également dite zone de jonction formée par deux panneaux 6, 8 au moins partiellement superposés et appartenant respectivement aux deux ensembles 1a, 1b. Bien entendu, la zone de jonction 4 est destinée à recevoir la couture orbitale de rivets, tel que cela sera explicité ci-après. De ce fait, suite à la mise en référence des deux ensembles 1a, 1b, la zone de recouvrement obtenue, dans laquelle se trouve une couche de mastic d'interposition entre les deux panneaux 6, 8, se trouve dans la configuration adéquate pour la réalisation du perçage des orifices destinés à loger les différents rivets de la couture. A titre informatif, on prévoit préférentiellement que du mastic d'interposition ou mastic d'étanchéité soit placé sur chacun des deux panneaux 6, 8 avant la mise en référence des deux ensembles 1a, 1b.

L'étape suivante symbolisée sur la figure 2 consiste à la mise en place de plusieurs premiers dispositifs de mise en pression 10 de la zone de recouvrement 4, sur un premier côté 14 de celle-ci, et, à la mise en place de plusieurs seconds dispositifs de mise en pression 12 sur un second côté 16 de la zone de recouvrement, opposé au premier côté. A titre indicatif, le premier côté 14 peut constituer le côté extérieur du fuselage de l'aéronef, et le second côté 16 le côté intérieur.

Ainsi, comme on peut le voir sur la figure 2, ces dispositifs 10, 12, également dénommés dispositif de bridage et prévus pour assurer conjointement une pression de serrage importante entre les deux panneaux 6, 8, par exemple comprise entre 600 et 1200 N, sont répartis tout le long de la zone de recouvrement 4.

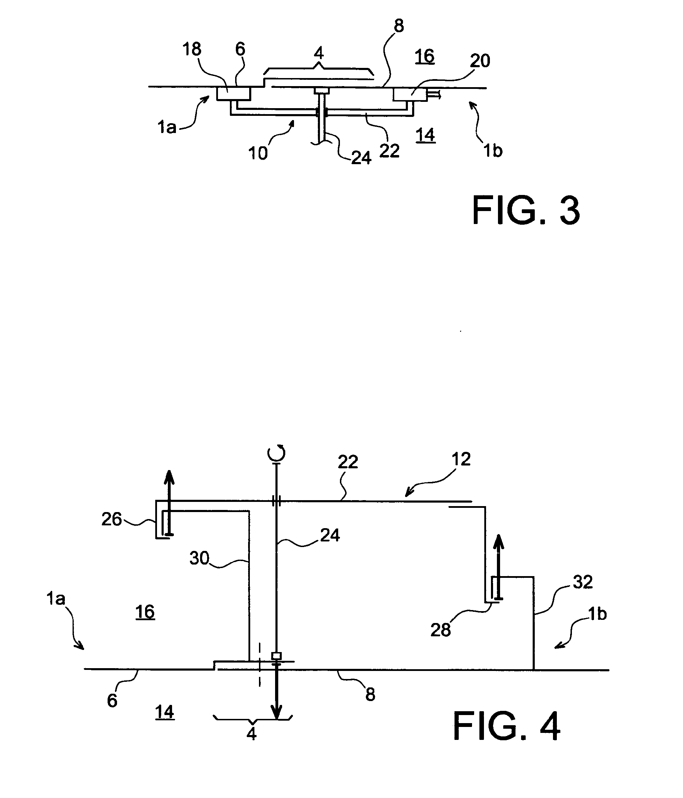

De préférence et comme montré plus en détail sur la figure 3, les dispositifs de mise en pression sont du type dispositif à ventouses, à savoir comprenant une première ventouse 18 plaquée contre le panneau 6 et une seconde ventouse 20 plaquée contre le panneau 8, ces ventouses étant rigidement reliées par une barre de jonction 22 traversée par une vis de pression 24 s'appuyant sur la zone de recouvrement 4, en étant disposée localement sensiblement orthogonalement à celle-ci. Bien entendu, les ventouses 18, 20 sont reliées à des moyens de mise sous vide (non représentés) permettant de conserver l'adhérence de celle-ci sur les panneaux 6, 8, même lors du serrage de la vis de pression 24.

A cet égard, il est indiqué que la vis de pression 24 permet d'appliquer localement une pression entre les deux parties de la zone 4, et donc de rapprocher les panneaux 6, 8, ce qui a pour conséquence de faire fluer le mastic d'interposition frais et non encore polymérisé, et de ce fait d'obtenir un contact métal-métal entre ces deux panneaux revêtus de mastic d'interposition et de préférence réalisés en alliage d'aluminium. Comme cela sera indiqué ci-après, la zone de recouvrement 4 peut alors être percée à proximité des vis 24 de manière à obtenir des trous de montage, sans qu'il n'y ait de formation de bavure à l'interface, ni d'introduction de copeaux ou d'huile de coupe dans la couche de mastic.

La pression de serrage appliquée est réglée par l'intermédiaire du couple de serrage de la vis 24, serrée à l'aide d'une visseuse à couple de débrayage. Conventionnellement, cette force de serrage locale s'établit idéalement autour de 600 N, qui correspond à un couple de serrage des vis du dispositif de mise en pression de l'ordre de 0,48 Nm. Il est possible d'appliquer sans risque de déformation des ensembles à assembler, et sans accroître exagérément les risques de bavure, une force de pression comprise entre 400 N et 1200 N. A noter que cette plage assez large permet d'absorber les imprécisions de réglage du couple de serrage, et de rapport entre le couple de serrage et la pression effective à l'interface.

Plusieurs variantes du dispositifs 10 montré sur la figure 3 peuvent être envisagées, en particulier pour les dispositifs de mise en pression 12 destinés à être montés du côté intérieur 16 du fuselage. En effet, comme montré sur la figure 4, l'une ou les deux ventouses peuvent être remplacées par des extrémités dite à presse 26, 28, celles-ci étant également reliées rigidement par une barre de jonction 22 traversée par une vis de pression 24 s'appuyant sur la zone de recouvrement 4, en étant disposée localement sensiblement orthogonalement à celle-ci. Chaque extrémité à presse dispose d'une forme adaptée permettant de se bloquer en translation dans le sens opposé à celui du serrage de la vis 24, sur un raidisseur 30, 32 appartenant à l'un des ensembles 1a, 1b. A titre informatif, en comparaison des outillages à ventouses, les outillages à brides de la figure 4 sont plus fiables dans le temps et surtout moins bruyants, le défaut de fiabilité des outillages à ventouses provenant essentiellement de l'usure progressive des lèvres d'étanchéité, et le bruit provenant des moyens de mise sous vide de type venturi. L'avantage principal des dispositifs à brides par rapport aux dispositifs à ventouses réside naturellement dans la suppression de la source d'air comprimé nécessaire au bon fonctionnement des ventouses.

Naturellement, il est également possible de combiner ces dispositifs afin d'obtenir une extrémité du type à presse, et l'autre du type ventouse, sans sortir du cadre de l'invention.

Comme montré sur la figure 2, les dispositifs 10 et 12 peuvent éventuellement être disposés en regard deux à deux de part et d'autre de la zone 4.

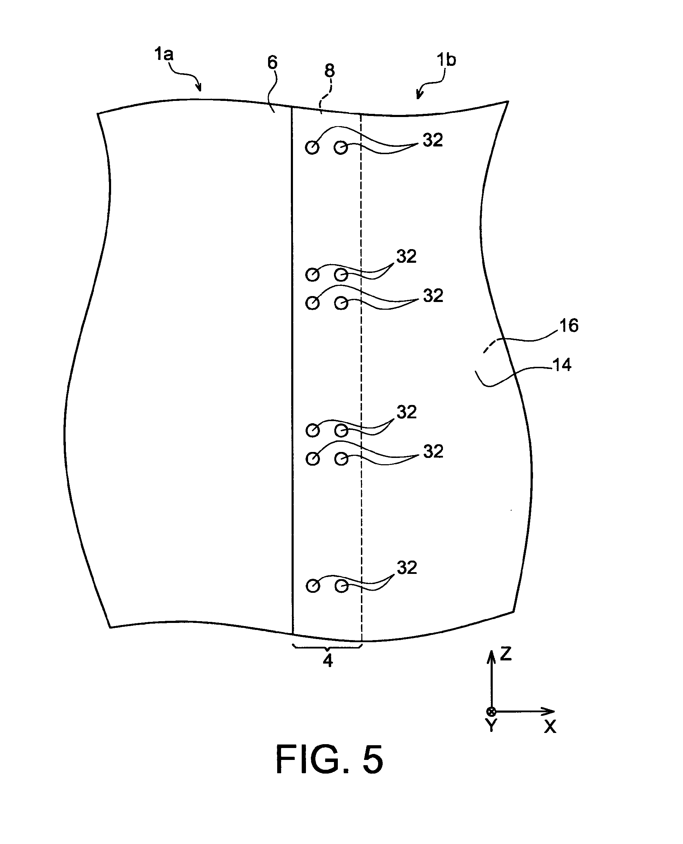

Ensuite, le procédé est poursuivi en réalisant à l'aide d'un outil de perçage les trous de montage précités, à travers la zone de recouvrement 4. Ces trous de montage 32 montrés sur la figure 5 sont donc destinés à la fixation ultérieure de grille de perçage, chaque trou de montage 32 étant réalisé à proximité d'au moins un premier dispositif de mise en pression 10 et d'au moins un second dispositif de mise en pression 12, afin d'obtenir les effets positifs décrits ci-dessus liés à l'application d'une pression substantielle entre les panneaux 6, 8.

Avant le montage des grilles de perçage sur la zone de recouvrement 4, les premiers dispositifs de mise en pression 10 situés côté extérieur 14 du fuselage sont démontés.

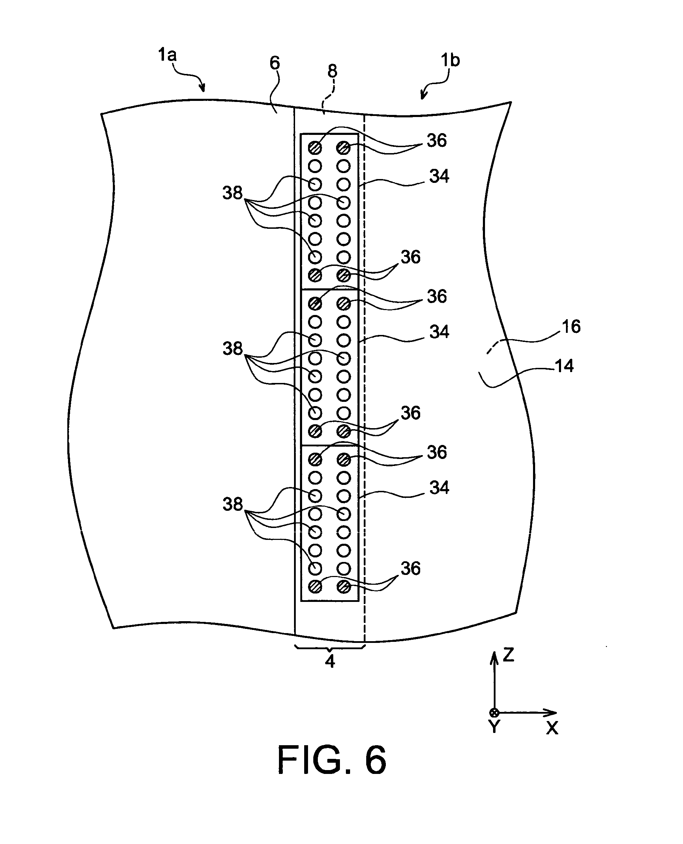

Comme cela deviendra évident dans la suite de la description, il est noté que les perçages ultérieurs des orifices au niveau des emplacements des organes de fixation dédiés à la jonction des ensembles 1a, 1b, sont effectivement réalisés par l'intermédiaire de grilles de perçage 34 qui permettent de positionner de manière précise les orifices ainsi réalisés. Comme visible sur la figure 6, ces grilles de perçage 34 sont fixées sur la zone 4 du premier côté 14, par l'intermédiaire de moyens de fixation provisoires telles que des agrafes spéciales 36 traversant chacune simultanément un orifice de grille ainsi qu'un trou de montage 32 préalablement réalisé à cet effet. Le principe général des telles agrafes est par exemple décrit dans le brevet EP 0 336 808, incorporé ici par référence. Ces agrafes spéciales 36 présentent donc la particularité de se fixer dans un orifice de la grille, localisant ainsi celle-ci par rapport aux trous de montage 32, et de présenter une hauteur réduite permettant d'installer un outil de perçage équipé d'un pied de pression de type « Concentric Collet », dans un orifice adjacent à l'orifice occupé par l'agrafe en question.

Les grilles 34 montrées sur la figure 6 sont donc agencées de façon successive et de préférence jointives le long de la couture à réaliser, les agrafes 36 assurant le positionnement et le maintien de ces grilles par rapport à la zone de recouvrement 4, mais réalisant également une pression de contact réduite à l'interface de l'assemblage.

De manière préférentielle, les grilles de perçage 34, de préférence réalisées en aluminium ou dans l'un de ses alliages, assurent trois fonctions distinctes :

- le bon positionnement des orifices sur le fuselage, grâce au centrage de l'outil de perçage successivement dans chacun des orifices de centrage correspondants 38 pratiqués sur les grilles 34 tel que montré sur la figure 6,
- l'immobilisation de l'outil de perçage en rotation et en translation durant l'opération de perçage, et
- la constitution d'un élément de réaction pour assurer la pression à l'interface durant le perçage, ceci constituant l'une des particularités de la présente invention.

Comme cela sera décrit ci-après, pour assurer l'ensemble de ces fonctions, les grilles de perçage présentent des caractéristiques structurelles déterminées tant du point de vue du dimensionnement que du choix de la matière les constituant.

Ensuite, l'étape de perçage des orifices à travers la zone de recouvrement 4 est réalisée depuis le premier côté 14 de la zone de recouvrement 4, à l'aide de l'outil de perçage destiné à coopérer successivement avec chaque grille de perçage 34, chaque orifice étant réalisé à proximité d'au moins un second dispositif de mise en pression 12 resté en place pour cette étape.

A titre informatif, le perçage dont il est ici question intègre de préférence le perçage et le fraisurage, qui répondent de préférence aux contraintes suivantes :

- précision du positionnement des orifices sur le fuselage,
- précision du diamètre percé pour assurer l'assemblage en interférence de l'organe de fixation à sertir,
- précision de la profondeur de fraisurage pour assurer l'affleurement de la tête de l'organe de fixation, de sorte qu'il n'y ait aucun creux ou protubérance par rapport au fuselage extérieur,

- absence de création de bavure au niveau de l'interface, et,
- absence d'introduction de copeaux et d'huile de coupe à l'interface pourvue de mastic d'interposition.

A cet égard, le positionnement précis des orifices est assuré par les grilles de perçage 34. Afin d'assurer l'absence de bavure et d'introduction de copeaux ou d'huile à l'interface entre les panneaux au moment du perçage, on recherche donc à appliquer une pression tendant à rapprocher ces panneaux, au voisinage du foret pendant le perçage. Comme cela sera explicité ci-après, la solution adoptée dans la présente invention permet d'obtenir une mise sous pression concentrique au foret durant le perçage, les moyens utilisés étant logés à l'intérieur d'un orifice de centrage de la grille et ne nuisant par conséquent aucunement au centrage de l'outil.

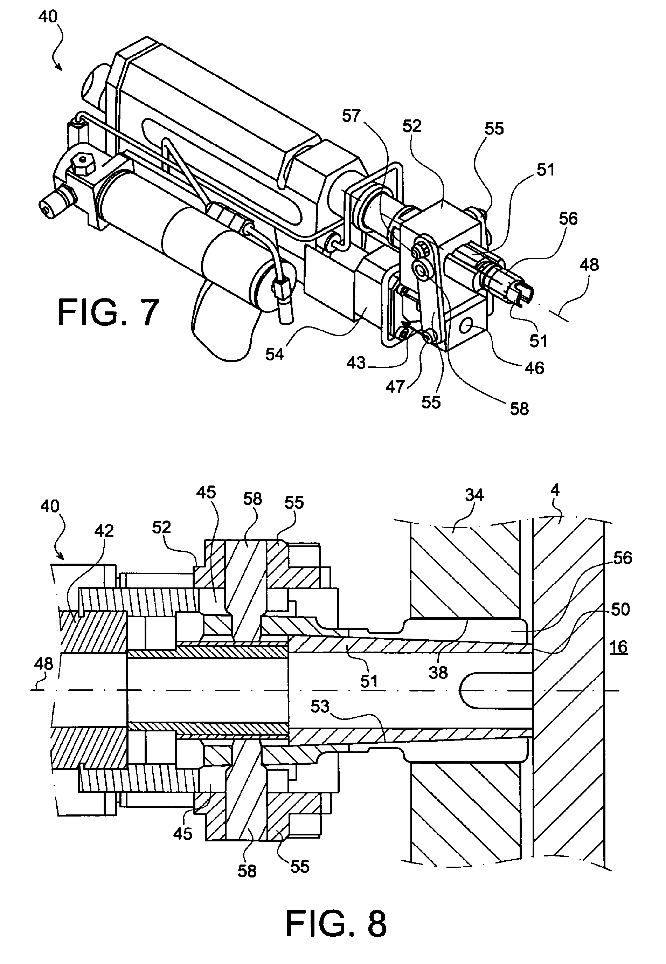

L'outil de perçage employé peut être du type classiquement connu de l'homme du métier, tel que celui fabriqué par la société Cooper Power Tools et désigné « P2 Drill with Concentric Collet Foot ». Ce type d'outil de perçage est également décrit dans le document EP 0 761 351 A, qui est inclus ici par référence. Cet outil 40 est aussi représenté sur les figures 7 et 8.

D'une manière générale, l'outil de perçage 40 est avantageusement utilisé dans la présente invention pour :

- positionner et maintenir cet outil sur la grille par l'intermédiaire d'une bague de centrage expansible,
- réaliser une butée de profondeur par contact de l'extrémité d'un mandrin sur le fuselage, et
- cela constitue une particularité propre à la présente invention, générer une pression de contact sur le fuselage concentriquement au perçage à l'aide du mandrin, afin d'assurer un contact direct des panneaux à assembler et éviter ainsi la formation de bavure et l'introduction de copeaux à l'interface pourvue de mastic d'interposition.

Les deux premières fonctions sont connues de l'homme du métier. La troisième, relative à l'application d'une pression d'interface, est une conséquence du principe de fonctionnement particulier de l'outil de perçage 40 dans des conditions spécifiques imposées au niveau des grilles de perçage 34, de préférence associée à la pression d'interface générée par les dispositifs de mise en pression 12.

En référence donc aux figures 7 et 8, on voit l'outil de perçage 40 comportant globalement un corps 42 se prolongeant par un mandrin d'appui 51, dont l'extrémité 50 est destinée à être au contact de la zone de recouvrement 4 durant le perçage. Durant le perçage d'un orifice dans le fuselage, le foret (non représenté) est prévu pour se déplacer intérieurement et concentriquement par rapport au mandrin d'appui 51.

Au niveau de la partie avant de l'outil 40, le mandrin 51 est solidaire d'un pied de pression 52, lui-même solidaire d'un axe 57 ou axe supérieur. De plus, une bague expansible 56, destinée à être introduite dans un orifice de centrage 38 d'une grille de perçage 34, épouse le mandrin 51 selon une surface de contact conique 53 visible sur la figure 8. Cette surface de contact conique 53, prévue pour se rétrécir en se rapprochant de l'extrémité 50 du mandrin, permet lors de l'application d'un mouvement relatif selon un axe central de surface de contact conique 48, entre le mandrin 51 et la bague 56, une expansion de cette bague assurant son blocage dans l'orifice de centrage correspondant 38. Plus précisément et comme cela sera détaillé ultérieurement, l'application du mouvement relatif entre la bague expansible 56 et le mandrin d'appui 51 est réalisée de manière à engendrer, suite au blocage de la bague expansible 56 dans l'orifice de centrage correspondant 38, un déplacement du mandrin 51 en appui contre la zone de recouvrement 4, à travers l'orifice de centrage correspondant et selon l'axe central de surface de contact conique 48 en direction de cette zone de recouvrement afin d'exercer une pression sur celle-ci.

Pour obtenir ce déplacement relatif, l'outil 40 comprend un vérin 54 solidaire du corps 42, dont l'extrémité 46 est reliée par un axe 47 ou axe inférieur, à une paire de biellettes 55, et plus précisément à une extrémité inférieure de ces biellettes 55 dont l'extrémité supérieure est quant à elle articulée sur l'axe supérieur 57 précité. De plus, entre les axes parallèle 47 et 57, l'outil 40 présente un axe intermédiaire 58 ou double axes intermédiaires solidaires de la bague d'expansion 56, cet axe 58 traversant des lumières 45 pratiquées dans le pied de pression 52.

Ainsi, la conception de cet outil 40 est telle que lorsque le vérin 54 est actionné dans le sens de la flèche 43 de la figure 7, cela a pour effet d'appliquer un déplacement de l'extrémité inférieure des biellettes 55 dans le même sens que celui de la flèche 43. Un tel déplacement des biellettes 55 sous l'effet du vérin 54 produit effectivement un mouvement relatif entre la bague 56 et le mandrin 51, déplacement relatif qui du fait du contact selon la surface conique 53 produit une expansion de la bague 56. Plus précisément, dans son principe tel que décrit dans l'art antérieur, l'actionnement du vérin 54 produit un mouvement de la bague 56 vers l'arrière pendant que le mandrin reste immobile en appui contre la zone 4, c'est-à-dire que l'axe 57 joue le rôle de pivot et l'axe 58 se déplace dans le sens opposé à celui allant vers les panneaux à assembler, à savoir selon la flèche 43, à travers les lumières 45 du pied de pression prévues à cet effet. Ainsi, dans ce cas, c'est la bague 56 qui en s'expansant subit simultanément un mouvement par rapport à l'orifice de centrage dans lequel elle est placée, et non le mandrin qui reste fixe par rapport à ce même orifice de centrage. Toujours dans l'art antérieur, le mouvement relatif est stoppé lorsque la bague a été suffisamment expansée pour assurer le blocage en rotation et en translation de l'outil par rapport à la grille pourvue de l'orifice de centrage en question.

Dans le procédé selon la présente invention, il est en revanche fait en sorte que le mouvement relatif appliqué entre la bague 56 et le mandrin 51 se traduise essentiellement par un mouvement du mandrin dans la direction de la zone de recouvrement 4, et non pas par un mouvement de la bague 56 dans la direction opposée à celle de la zone de recouvrement, même si ce dernier mouvement peut être observé jusqu'à l'obtention d'un véritable blocage de la bague 56 dans l'orifice de centrage 38 de la grille de perçage 34. A cet égard, l'homme du métier sera naturellement en mesure d'adapter la conception des différents éléments en question pour aboutir à un tel fonctionnement, notamment en dimensionnant de façon appropriée le diamètre nominal de la bague expansible 56 et celui de l'orifice de centrage 38. Comme montré sur la figure 8 représentant l'outil 40 avant l'actionnement du vérin 54 et juste après son introduction dans l'orifice de centrage 38, un faible jeu initial entre la bague 56 et l'orifice de centrage 38, par exemple inférieur à 0,5 mm et de préférence de l'ordre de 0,3 mm, permet aisément d'obtenir le blocage de la bague dans ce même orifice de perçage extrêmement rapidement après le début de l'application du mouvement relatif, ce jeu étant néanmoins suffisant pour assurer une introduction aisée de la bague expansible dans l'orifice de centrage avant perçage. A ce titre, il a été constaté que l'application d'une tolérances H7 pour les orifices de centrage 38 des grilles de perçage 34 pouvait s'avérer efficace pour l'obtention de l'effet désiré.

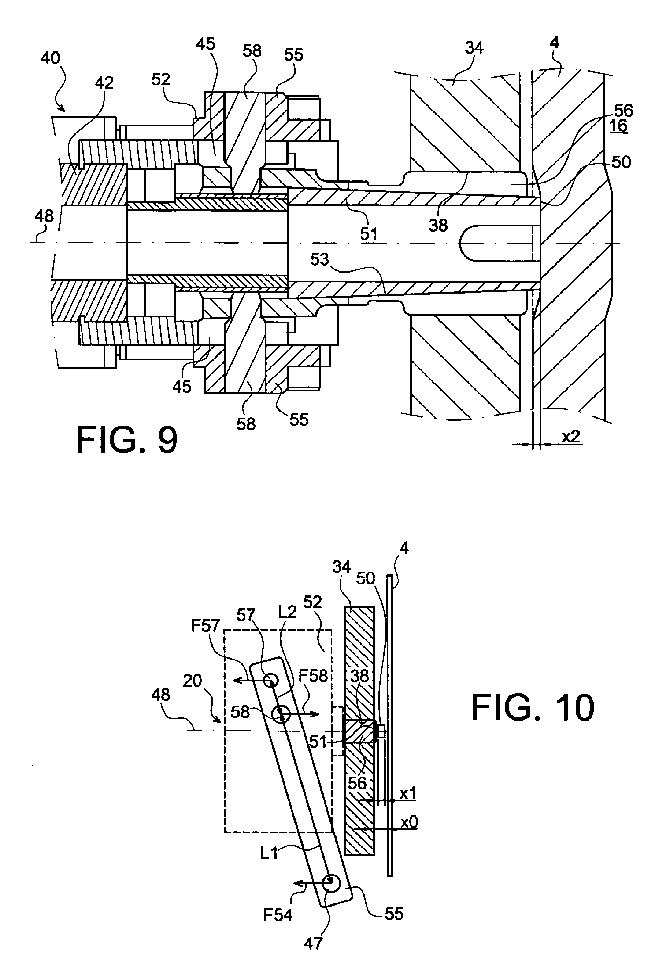

Par ailleurs, l'application du mouvement relatif entre la bague expansible 56 et le mandrin d'appui 51 est préférentiellement réalisée de manière à engendrer un déplacement du mandrin en appui contre la zone de recouvrement 4 et à travers l'orifice de centrage correspondant 38, sur une distance (x2), montrée sur la figure 9, respectant la condition (x2) > 0,90.(x), où (x) (non représenté) correspond à une distance totale du mouvement relatif appliqué entre la bague 56 et le mandrin 51. La relation précitée traduit effectivement la volonté d'obtenir essentiellement un mouvement du mandrin 51 à travers l'orifice de centrage 38, plutôt qu'un mouvement de la bague 56 à travers ce même orifice de centrage 38 dans un sens opposé.

Par conséquent, contrairement à l'art antérieur, l'application du mouvement relatif est réalisée de manière à obtenir un déplacement du mandrin 51 dans le repère X, Y, Z de l'aéronef, entraînant avec lui la partie sollicitée en pression de la zone 4 tel que montré sur la figure 9, la bague 56 restant quant à elle sensiblement immobile dans ce même repère.

En pratique, il a été constaté que l'axe 58 joue alors le rôle de pivot en restant fixe dans le repère X, Y, Z de l'aéronef, et que l'axe 57 se déplace dans le sens allant vers la zone de recouvrement 4, opposé au sens de la flèche 43.

Une telle situation présente l'avantage de pouvoir, par l'intermédiaire de ce fonctionnement particulier recherché, appliquer dans la zone contiguë au perçage une force de pression qui peut être suffisante pour assurer :

- le fluage du mastic d'étanchéité au voisinage immédiat de l'orifice du fuselage, de manière à assurer un contact métal-métal entre les deux panneaux de la zone 4 ;
- éviter l'introduction de copeaux et d'huile de coupe à l'interface ; et
- éviter la formation de bavures en entrée et sortie de perçage à l'interface.

A présent, il va être démontré que la pression de contact exercée par le mandrin 51 de l'outil 40, lors du perçage d'un orifice sur le fuselage, peut être maîtrisée en fonction de différents paramètres.

Au niveau de la surface de contact conique 53 entre le mandrin 51 et la bague 56, le mandrin 51 sollicite la bague par une pression proportionnelle au déplacement relatif de ces deux éléments et normale à la surface de contact. Il subit en outre un frottement d'angle $\varphi 1$ qui tend à s'opposer au déplacement relatif.

Lors de son expansion dans l'orifice 38 de la grille de perçage 34, la bague 56 subit une pression radiale $P_{56}$ proportionnelle au déplacement relatif entre le mandrin 51 et la bague 56. Si $\Delta x$ est ce déplacement, l'accroissement de pression résultant $\Delta P_{56}$ est tel que :

$$\Delta P_{56} = K\Delta x\ tg\alpha/S$$

où K est une constante fonction de l'élasticité des pièces en présence, $S$ étant la surface de contact entre la bague 56 et l'orifice 38 de la grille 34.

Si φ2 est le coefficient de frottement à l'interface entre la bague 56 et l'orifice 38, on appelle $F_{56}$ la résultante axiale des efforts de frottement de la bague 56 dans l'orifice :

$$F_{56} = P_{56} \cdot S \cdot tg\varphi 2$$

Il est tout d'abord considéré une première situation dans laquelle il n'y a pas de réaction de la zone de recouvrement 4 contre le mandrin 51, c'est-à-dire que l'outil est centré et bloqué dans la grille de perçage 34 sans que celui-ci ne soit en vis à vis d'un obstacle. La bague 56 est introduite sans jeu ou presque dans l'alésage de la grille 3. Dans ces conditions, lorsque le vérin 54 est actionné, deux cinématiques sont susceptibles de se produire. Dans la première cinématique, celle la plus probable et correspondant à l'effet désiré, l'axe 58 reste immobile dans le repère X, Y, Z de l'aéronef, et joue le rôle de pivot. Dans la seconde cinématique contraire à la première, c'est l'axe 57 qui reste immobile dans le repère X, Y, Z de l'aéronef et joue le rôle de pivot, car la bague 56 se déplace par rapport à la grille 34 dans le sens opposé à celui de la zone 4.

Le vérin 54, l'axe 57 et l'axe 58 étant liés par les biellettes 55 rigides, pour ces deux cinématiques, la vitesse et le déplacement relatifs entre les éléments 56 et 51 sont les mêmes.

Les efforts appliqués sur le mandrin 51, sur la bague 56 et le vérin 54 étant proportionnels à ce déplacement relatif, ils sont également les mêmes pour les deux cinématiques. Ainsi, la solution cinématique la plus probable est celle qui conduit à la dissipation d'énergie minimale. A cet égard, l'énergie dispensée par le vérin 54 se répartie de la façon suivante :

- pour la première cinématique, entre le frottement au niveau de la surface conique 53 entre les éléments 51 et 56, la déformation élastique radiale des différents éléments (grille 34, bague 56, mandrin 51), consécutive à l'expansion, et les frottements aux articulations ;
- pour la seconde cinématique, entre les mêmes sources de dissipation que celle mentionnées ci-dessus, ayant la même intensité, auxquelles s'ajoute le frottement entre la bague 56 et l'orifice de centrage 38.

Energétiquement, la première cinématique est donc plus favorable, et c'est donc celle qui sera effectivement observée lors de la mise en oeuvre du procédé. Ainsi, dès lors qu'il y a contact entre la bague 56 et l'orifice de centrage 38 de la grille de positionnement 34, la bague 56 reste immobile par rapport à la grille et l'action du vérin 54 conduit à une « extraction » du mandrin 51.

De plus, en se plaçant dans le cas de la première cinématique indiquée ci-dessus, sans obstacle devant le mandrin, l'actionnement du vérin 54 provoque un déplacement du mandrin 51 par rapport à la grille 34 en direction de la zone 4 et selon l'axe 48, jusqu'à ce que l'effort appliqué à ce vérin soit égal à l'effort de réaction de la bague 56 sur le mandrin 51, cet effort étant par la suite dénommé $F_{51}$.

En isolant le mandrin 51 dans cette situation d'équilibre, sous réserve que la fin de course du vérin 54 ne soit pas atteinte avant cet état, selon l'axe 48 correspondant également à l'axe de perçage, le mandrin 51 est en équilibre sous l'action de deux forces qui sont donc égales en intensité et direction, mais de sens opposé, à savoir :

- $F_{54}$ + $F_{57}$, respectivement les forces appliquées par le vérin 54 et par l'axe 57, et
- la réaction de la bague 56 sur le mandrin 51, à savoir $F_{51}$.

Chaque biellette 55 est quant à elle en équilibre sous l'action de trois forces parallèles $F_{54}$, $F_{57}$ et $F_{58}$, comme montré sur la figure 10. On en déduit que :

- $F_{57} = \dfrac{L1}{L2} F_{54}$ , les longueurs L1 et L2 correspondant respectivement à la distance entre l'axe 47 et l'axe 58, et à la distance entre l'axe 58 et l'axe 57 ; et

- $F_{51} = F_{54}^{MAX}\left(1 + \dfrac{L1}{L2}\right)$ , $F_{54}^{MAX}$ étant la force maximale déployée par le vérin 54.

A noter que cette force est obtenue pour un déplacement du mandrin 51 selon l'axe 46 d'une distance dénommée $x_1$ et montrée schématiquement sur la figure 10, à partir de sa position initiale comptée au début du contact entre la bague 56 et l'orifice 38 de la grille 34.

Comme indiqué précédemment, la force $F_{51}$ est proportionnelle au déplacement relatif entre les éléments 56 et 51, donc proportionnelle au déplacement $x_1$, soit $F_{51}=C_{51}x_1$, $C_{51}$ étant un coefficient de raideur qui rend compte de cette proportionnalité.

En se plaçant à présent dans une configuration différente où un obstacle, en l'occurrence la zone de recouvrement 4, est positionnée contre le mandrin 51 en position initiale par rapport à la grille, lorsque le vérin 54 est actionné, le mandrin 51 va alors se déplacer jusqu'à atteindre une position d'équilibre $x_2$ considéré selon l'axe 46, position telle que :

- $x_2 < x_1$, et

- $$F_{54}^{MAX}\left(1+\frac{L1}{L2}\right) = C_{51}x_2 + R$$

On en déduit que la réaction $R$, équivalente à la force de poussée / pression sur le fuselage, est donnée par :

- $R = C_{51}(x_1 - x_2)$,

- soit $R = F_{54}^{MAX}\left(1+\frac{L1}{L2}\right)\left(1-\frac{x_2}{x_1}\right)$

Il est donc possible, notamment, par un choix judicieux de l'ajustement de la bague 56 non expansée, dans son état nominal, dans l'orifice de centrage 38 de la gille de perçage 34, par la distance entre la grille 34 et la zone de recouvrement 4, par le choix de la capacité du vérin 54, et le cas échéant par le rapport des bras de levier au niveau des biellettes 55, de contrôler dans une plage donnée d'une part la course nécessaire pour arriver au contact métal-métal entre les panneaux à l'interface de l'assemblage, et d'autre part l'effort de pression à appliquer. Ces réglages peuvent par exemple être obtenus par essais successifs.

A titre informatif, une fois cette position d'équilibre atteinte, l'effort reste appliqué sur la zone de recouvrement 4, le retrait du mandrin 51 sous l'effet de la réaction élastique étant empêché par le frottement régnant entre la surface conique du mandrin 51 et celle de la bague 56, à condition que $R$ soit telle que la réaction correspondante ne sorte pas du cône d'adhérence.

Ainsi, le mandrin 51, après relâchement du vérin 54 est, selon l'axe 46, en équilibre sous l'action de deux forces, à savoir :

- $R$, et
- la réaction correspondant à $R$ qui est :

$$C_{51}x_2 \frac{\tan(\varphi 1 - \alpha)}{\tan(\alpha)} \geq R = F_{54}^{MAX}\left(1+\frac{L1}{L2}\right) - C_{51}x_2$$

On note « $\tau$ » le rapport $\dfrac{\tan(\varphi 1 - \alpha)}{\tan(\alpha)}$ , , pour une position donnée $x_2$. *Rmax* est alors définie par :

$$-\left(F_{54}^{MAX}\left(1+\frac{L1}{L2}\right)\right)\tau = R\max(1+\tau)$$

- soit,

$$R\max = F_{54}^{MAX} \frac{\left(1 + \frac{L1}{L2}\right)}{\left(1 + \frac{1}{\tau}\right)}$$

Le calcul de « $\tau$ » est effectué en considérant que la pression radiale est proportionnelle à $\tan(\alpha)$, $\alpha$ étant le demi-angle du cône de la surface de contact 53. La force de frottement s'opposant à « l'éjection » du mandrin 51 sous l'effet de la réaction élastique du fuselage est inversée par rapport à la force de frottement qui s'oppose au coulissement du mandrin 51 dans la bague 56, d'où l'expression en $\tan(\varphi1-\alpha)$ au lieu de $\tan(\varphi1+\alpha)$ trouvée pour $F_{51}$.

Dans le cas préféré de l'outil 40 tel que décrit ci-dessus, du type « Concentric Collet », $\frac{L1}{L2} \cong 5$, $\alpha = 2{,}5°$,

$\varphi1 = 8°$. Par suite on a $\frac{1}{\tau} \cong 0{,}45$, d'où potentiellement $R\max \cong 4F_{54}^{MAX}$..

Soit $\frac{x_2}{x_1} = \frac{1}{3}$, ce qui suppose une raideur de contact élevée entre la zone de recouvrement 4 du fuselage et l'extrémité 50 du mandrin 51.

Dans la pratique, les courses ne sont à priori pas réglées de la sorte, et les raideurs de contact ne sont pas suffisantes pour atteindre de telles conditions. Plus généralement, on constate $R \cong F_{54}^{MAX}$.. Il existe donc dans tous les cas une marge satisfaisante de sécurité par rapport à la stabilité du système.

Cette valeur effectivement constatée de l'effort s'explique dans la mesure où, en partant du contact initial du mandrin 51 avec le fuselage, dans un premier temps, le déplacement selon l'axe 46 de celui-ci a pour effet essentiel de faire fluer le mastic d'interposition. La force $R$ est due au fluage du mastic et à la déformation élastique locale du panneau extérieur. Ce processus se poursuit sur une distance de l'ordre du millimètre, jusqu'à ce que le contact métal-métal s'établisse. A ce moment, l'effort $R$ croît plus rapidement, car la déformation concerne cette fois une double épaisseur, à savoir les deux panneaux 6, 8, qui est soutenue à faible distance par l'intermédiaire des dispositifs de mise en pression 12 du côté intérieur du fuselage, toujours en place. Le rapport $\frac{x_2}{x_1}$ est donc de l'ordre de 0,8 à 0,85. En conséquence, il est clair que le système est très tolérant vis à vis des variations de distance entre les deux panneaux 6, 8 à percer.

Par suite, l'effort de pression couramment appliqué à la pression des tôles par l'outil de perçage est facilement compris entre 600 N et 1200 N, selon l'épaisseur des panneaux en présence.

Il pourrait bien entendu être employé d'autres types d'outils de perçage pour la mise en oeuvre du procédé selon l'invention, comme par exemple des variantes utilisant soit un vérin agissant directement sur la bague 56, soit des systèmes de cames en lieu et place des biellettes 55, le principe d'opération et de réglage des paramètres liés à la grille 34 étant en tout point équivalent.

En référence à nouveau à la figure 10, on prévoit préférentiellement que l'épaisseur de la grille 34 est légèrement inférieure à la longueur de la bague 56, selon l'axe 46. Il est par ailleurs fait en sorte que la distance $x_0$ entre la face inférieure de la grille 34 au niveau de l'alésage et le fuselage 4 soit telle que les extrémités de la bague 56 dépassent de part et d'autre de l'orifice de centrage 38, lors de l'introduction de cette bague dans ce dernier, introduction stoppée par le contact du mandrin 51 avec le fuselage 4. Ainsi, la distance $x_0$ est de préférence fixée de telle sorte que :

- l'effort de pression adapté puisse s'appliquer au voisinage du trou à percer (distance $x_2$ par rapport à $x_1$ « à vide ») ;
- les deux extrémités de la bague 56 se trouvent à l'extérieur de l'orifice de centrage 38 (distance $x_0$).

Ces deux conditions sont fixées par la hauteur des pieds d'appui de la grille sur le fuselage, à savoir la hauteur des agrafes 36, et par la tolérance de forme de réalisation de cette grille 34 en comparaison de la tolérance de forme du fuselage à l'emplacement de la grille. L'homme du métier pourra déterminer cette distance et la tolérance sur cette distance par un calcul classique de chaînes de côtes. La tolérance de réalisation sera d'autant plus large que le rapport

$\dfrac{x_2}{x_1}$ a été choisi judicieusement. Dans les conditions évoquées précédemment, avec un rapport $\dfrac{x_2}{x_1}$ de l'ordre de 0,85, c'est-à-dire de telle sorte que la condition $R \cong F_{54}^{MAX}$ soit vérifiée, la tolérance sur la distance $x_0$ est de +/- 0,2 mm. Cette condition s'avère largement satisfaisante pour une réalisation industrielle des grilles de perçage 34.

Le problème technique qui consiste donc à assurer des conditions de pression adaptées à l'interface en cours de perçage est par conséquent résolu par un choix raisonné des caractéristiques des grilles de perçage (matière, dimensionnement, etc.) en rapport des caractéristiques de fonctionnement de l'outil de perçage dit « Concentric Collet » et des besoins de pression à l'interface, sur la zone de recouvrement. Sachant que la pression est de préférence comprise entre 400 N et 1200 N, et idéalement aux environ de 600 N, ces conditions peuvent être obtenues par :

- le réglage des distances $x_1$ et $x_2$ par l'intermédiaire de la distance $x_0$ et de l'ajustement de l'orifice de centrage 38 ;
- le choix du « point de fonctionnement » (distance $x_2$) de l'outil de perçage, par rapport au fuselage 4 ;
- la force développée par le vérin 54 ; et
- le choix de la matière de constitution de la grille 34 et de préférence l'absence de chemisage acier des orifices de centrage.

Bien entendu, le mise en pression de la zone de recouvrement 4 est réalisée légèrement antérieurement au perçage même de l'orifice désiré dans cette zone, ce perçage étant effectué à l'aide d'un foret (non représenté) traversant le mandrin 51 de façon coaxiale continuant quant à lui à exercer la pression désirer pour globalement éviter la formation de bavures sur les panneaux 6, 8.

Plus précisément, le perçage-fraisurage est effectué à l'aide d'un foret fraisureur, en une seule opération. Le mandrin 51, dont l'extrémité 50 est en contact avec le fuselage 4, définit une butée axiale qui permet d'assurer la précision de profondeur de la fraisure. La profondeur de fraisure est fixée de manière à assurer des conditions adéquates d'affleurement de la tête de rivet. Le réglage approprié de la profondeur de fraisure est par exemple déterminé par des essais en laboratoire qui permettent de définir pour chaque diamètre de rivet la profondeur de fraisure nécessaire afin que les conditions d'affleurement de sa tête soient vérifiées après son écrasement.

L'arrêt de la pénétration, c'est-à-dire l'arrêt de l'avance de l'outil, est assuré par une butée connectée au mandrin 51, lui même en contact avec le fuselage. Ainsi, la profondeur de fraisure peut être assurée même en cas de fluctuation des distances $x_0$ et $x_2$.

Le perçage / alésage des alliages d'aluminium, constituant la majorité des fuselages actuels, reste délicat sans lubrification. L'arrosage est ici évité du fait du risque d'introduction de fluide de coupe à l'interface pourvue de mastic d'interposition. A cette fin, le perçage est préférentiellement effectué sous micro-pulvérisation d'huile, par le centre de l'outil ou latéralement lorsque le perçage est effectué à grande vitesse de coupe, à savoir de l'ordre de 15 000 trs/min ou supérieure.

Les quantités de lubrification sont de préférence adaptées au diamètre de perçage et de fraisurage, et sont généralement fixées dans une fourchette allant de 3 à 50 ml à l'heure d'un produit lubrifiant dont la viscosité maximale est de 400 mm$^2$/sec. Cet apport de micro-pulvérisation d'huile améliore grandement la qualité du perçage et permet l'utilisation à la fois d'outil de perçage moins puissants, donc plus légers, et de réduire l'effort de pénétration. L'utilisation de la micro-pulvérisation d'huile est rendue possible par la pression suffisante qui règne à l'interface métal-métal au niveau de la jonction, et qui, combinée à la faible quantité, à la viscosité de l'huile et à l'aspiration éventuelle, évite toute introduction d'huile dans le mastic d'interposition.

Avantageusement, la machine peut être équipée d'un dispositif d'aspiration au niveau du pied de pression 52, qui permet d'évacuer vers une centrale de récupération les copeaux et les vapeurs d'huiles. Cette aspiration empêche toute souillure des joints de mastic situés à l'extérieur du fuselage. Pour cette même raison de facilité d'évacuation des copeaux, l'utilisation de forets à goujure hélicoïdale est préférable.

Dans certaines circonstances, des copeaux peuvent éventuellement être projetés dans le fuselage intérieur, en sortie d'orifice. Ceux-ci peuvent alors se déposer sur l'interface d'assemblage, particulièrement en partie basse de l'aéronef, et risquent de ce fait de s'introduite dans cette interface. Dans ces conditions, il est avantageux de protéger la ligne d'interface, référencée 2 sur les figures, par une bande adhésive dite « bande cache ».

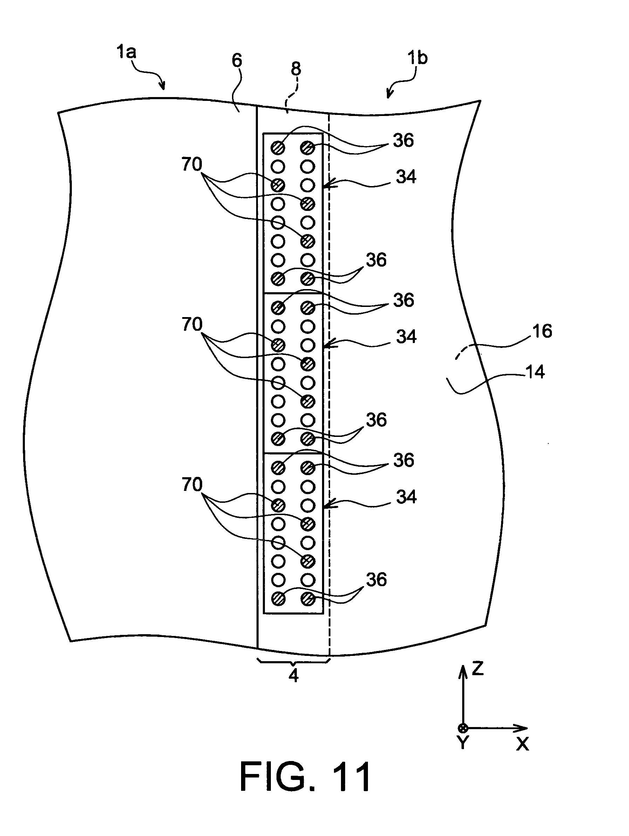

Une fois l'ensemble des orifices percés à l'aide de l'outil depuis le côté extérieur 14 du fuselage, il est précédé à une mise en place d'organes de fixation provisoires 70, chacun pouvant également prendre la forme d'une agrafe. Il est noté que chaque agrafe 70 traverse donc l'un des orifices pratiqués dans la zone de recouvrement 4, ainsi que son orifice de centrage correspondant 38 pratiqué sur la grille de perçage 34 concernée. A cet égard, il est indiqué que chaque agrafe 70 pourrait être fixée directement à la suite du perçage de son orifice associé, et donc antérieurement au perçage d'orifice suivant, sans sortir du cadre de l'invention. De plus, chaque orifice percé ne nécessite pas le logement d'une agrafe 70, comme cela est d'ailleurs représenté sur la figure 11.

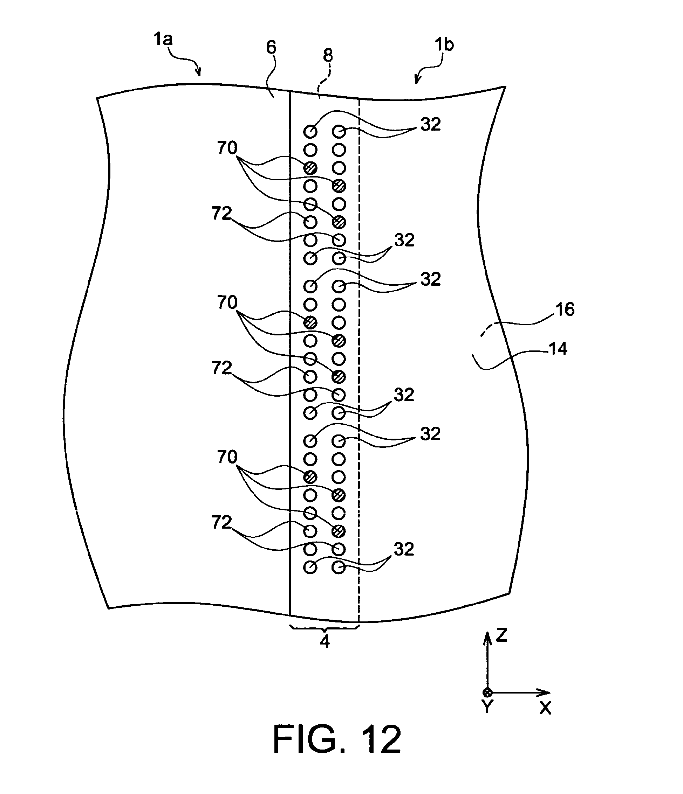

Ensuite, il est procédé au démontage de chaque grille de perçage 34, et des moyens de fixation provisoires 36. Comme visible sur la figure 12, cela laisse alors uniquement apparaître du côté extérieur 14 du fuselage, les trous de montage 32, les orifices 72 destinés à loger les organes de fixation, et les organes de fixation provisoires 70.

Lorsque chaque second dispositif de mise en pression 12 a également été démonté, il est alors procédé à la mise en place des organes de fixation 74 dans leurs orifices respectifs 72, cette mise en place étant bien entendu effectuée en conservant le positionnement relatif déterminé des ensembles 1a, 1b obtenu lors de l'étape de mise en référence. Cette étape consistant à obtenir la couture de rivets s'effectue d'une manière classique et connue de l'homme du métier, de préférence uniquement depuis le côté extérieur 14 du fuselage.

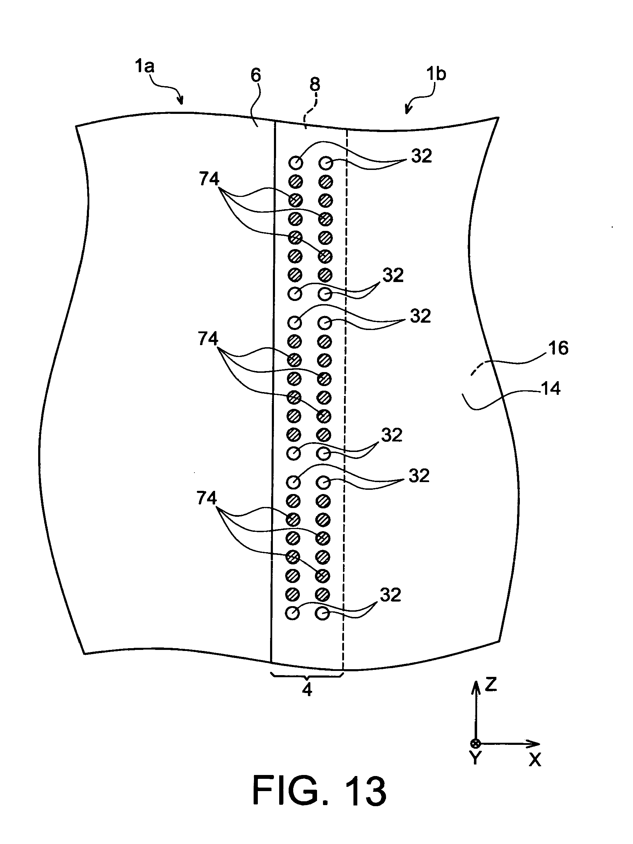

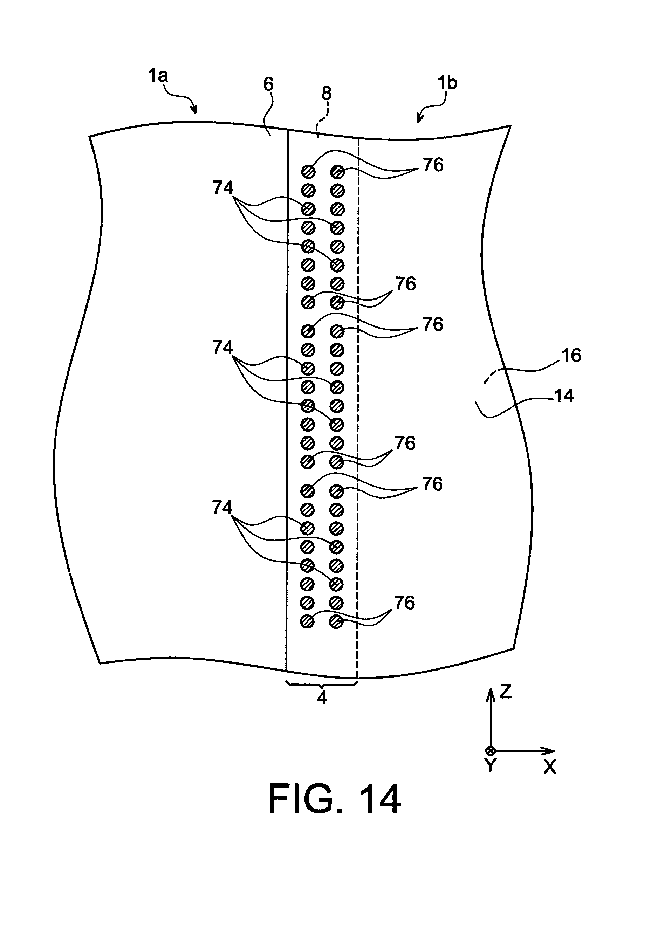

A ce stade, seuls les trous de montage 32 restent libres sur la zone de recouvrement 4, tel que cela est montré sur la figure 13. De ce fait, il est alors précédé à la mise en place d'organes de fixation annexes 76 dans ces mêmes trous de montage 32, tels que des rivets, comme visible sur la figure 14. Plus précisément, après la pose des organes de fixation 74, les trous 32 dits de montage, dans lesquels prenaient place les agrafes 36 pour le maintien des grilles 34, peuvent être alésés à leur diamètre définitif, fraisurés, et des organes de fixation annexes 76 correspondants posés dans ces mêmes trous. La pression d'interface installée par la pose et le sertissage préalable de touts les autres organes de fixation 74 permet d'effectuer ce perçage et ce fraisurage par des moyens classiques, sans l'intervention de moyens de pression supplémentaires.

Bien entendu, diverses modifications peuvent être apportées par l'homme du métier à l'invention qui vient d'être décrite, uniquement à titre d'exemple non limitatif.

## Revendications

**1.** Procédé d'assemblage de deux ensembles (1a, 1b) par l'intermédiaire d'une pluralité d'organes de fixation (74) destinés à établir une jonction entre deux panneaux (6, 8) au moins partiellement superposés appartenant respectivement aux deux ensembles et formant conjointement une zone de recouvrement (4), ledit procédé comprenant le perçage d'une pluralité d'orifices (32) à travers ladite zone de recouvrement, chacun desdits orifices étant destiné à loger l'un desdits organes de fixation, le perçage de chaque orifice étant réalisé à l'aide d'un outil de perçage (40) traversant un orifice de centrage (38) correspondant pratiqué sur une grille de perçage (34) montée fixement sur ladite zone de recouvrement, ledit outil de perçage comprenant un mandrin d'appui (51) sur ladite zone de recouvrement (4) ainsi qu'une bague expansible (56) épousant ledit mandrin selon une surface de contact conique (53) permettant, lors de l'application d'un mouvement relatif selon un axe central (48) de surface de contact conique entre ledit mandrin et ladite bague, une expansion de cette bague assurant son blocage dans ledit orifice de centrage (38) correspondant,
**caractérisé en ce que** l'application dudit mouvement relatif entre la bague expansible (56) et le mandrin d'appui (51) est réalisée de manière à engendrer, suite au blocage de la bague expansible dans ledit orifice de centrage correspondant (38), un déplacement du mandrin en appui contre ladite zone de recouvrement (4), à travers l'orifice de centrage correspondant (38) et selon l'axe central (48) de surface de contact conique (53) en direction de cette zone de recouvrement afin d'exercer une pression sur celle-ci.

**2.** Procédé selon la revendication 1, **caractérisé en ce que** l'application dudit mouvement relatif entre la bague expansible (56) et le mandrin d'appui (51) est réalisée de manière à engendrer un déplacement du mandrin en appui contre ladite zone de recouvrement (4) et à travers l'orifice de centrage correspondant, sur une distance (x2) respectant la condition (x2) > 0,90.(x), où (x) correspond à une distance totale du mouvement relatif appliqué entre la bague et le mandrin.

**3.** Procédé selon la revendication 1 ou la revendication 2, **caractérisé en ce que** l'application dudit mouvement relatif entre la bague expansible (56) et le mandrin d'appui (51) est réalisée de manière à engendrer, en fin d'application, une pression de mandrin d'appui, sur ladite zone de recouvrement (4), comprise entre environ 600 et 1200 N.

**4.** Procédé selon l'une quelconque des revendications précédentes, **caractérisé en ce que** ladite grille de perçage (34) est réalisée en aluminium ou dans l'un de ses alliages, et **en ce que** ladite bague expansible (56) est réalisée en acier.

**5.** Procédé selon l'une quelconque des revendications précédentes, **caractérisé en ce que** ladite grille de perçage (34) est conçue et agencée de sorte que préalablement à ladite application du mouvement relatif entre la bague expansible et le mandrin d'appui, lorsque ledit outil de perçage (40) est positionné avec son mandrin d'appui (51) traversant ledit orifice de centrage correspondant et en contact avec ladite zone de recouvrement (4), ladite bague d'expansion (56) fasse saillie de part et d'autre dudit orifice de centrage (38) correspondant.

6. Procédé selon l'une quelconque des revendications précédentes, **caractérisé en ce qu'**il comprend une étape de mise en référence desdits deux ensembles (1a, 1b), prévue pour amener ces deux ensembles dans un positionnement relatif déterminé permettant la réalisation du perçage desdits orifices.

7. Procédé selon la revendication 1 ou la revendication 6, **caractérisé en ce que** le perçage desdits orifices et une étape ultérieure de mise en place desdits organes de fixation (74) dans leurs orifices respectifs (32) sont réalisés successivement en conservant ledit positionnement relatif déterminé obtenu lors de ladite étape de mise en référence desdits deux ensembles.

8. Procédé selon l'une quelconque des revendications précédentes, **caractérisé en ce qu'**il comporte les étapes successives suivantes, réalisées en conservant ledit positionnement relatif déterminé obtenu lors de ladite étape de mise en référence desdits deux ensembles :

   - la fixation d'une ou plusieurs grilles de perçage (34) sur ladite zone de recouvrement (4), chaque grille de perçage étant pourvue d'une pluralité d'orifices de centrage (38) ;
   - le perçage desdits orifices (32) à travers ladite zone de recouvrement (4), à l'aide de l'outil de perçage (40) destiné à coopérer avec chaque grille de perçage (34) ;
   - le démontage de chaque grille de perçage ;
   - la mise en place desdits organes de fixation (74) dans leurs orifices respectifs.

9. Procédé selon l'une quelconque des revendications 1 à 7, **caractérisé en ce qu'**il comporte les étapes successives suivantes :

   - ladite mise en référence desdits deux ensembles (1a, 1b), prévue pour amener ces deux ensembles dans le positionnement relatif déterminé permettant la réalisation du perçage desdits orifices (32), lesdits deux ensembles ainsi positionnés formant conjointement ladite zone de recouvrement (4) présentant une couche de mastic d'interposition entre lesdits deux panneaux (6, 8) de cette zone ;
   - la mise en place d'un ou plusieurs premiers dispositifs de mise en pression (10) sur un premier côté de ladite zone de recouvrement, et, la mise en place d'un ou plusieurs seconds dispositifs de mise en pression (12) sur un second côté de ladite zone de recouvrement, opposé au premier côté ;
   - le perçage de trous de montage à travers ladite zone de recouvrement, pour la fixation de grille de perçage, chaque trou de montage étant réalisé à proximité d'au moins un premier dispositif de mise en pression et d'au moins un second dispositif de mise en pression ;
   - le démontage de chaque premier dispositif de mise en pression (10) ;
   - la fixation d'une ou plusieurs grilles de perçage (34) sur ladite zone de recouvrement (4), du premier côté de celle-ci, par l'intermédiaire de moyens de fixation provisoires (70) coopérant avec lesdits trous de montage ;
   - le perçage desdits orifices à travers ladite zone de recouvrement (4), depuis ledit premier côté de la zone de recouvrement, à l'aide de l'outil de perçage (40) destiné à coopérer avec chaque grille de perçage (34), chaque orifice étant réalisé à proximité d'au moins un second dispositif de mise en pression (12) ;
   - la mise en place d'organes de fixation provisoires (70) chacun traversant l'un desdits orifices pratiqués dans ladite zone de recouvrement, ainsi que son orifice de centrage correspondant pratiqué sur la grille de perçage ;
   - le démontage de chaque grille de perçage (34), et desdits moyens de fixation provisoires (70) ;
   - le démontage de chaque second dispositif de mise en pression (12) ;
   - la mise en place desdits organes de fixation (74) dans leurs orifices respectifs (32), cette mise en place étant effectuée en conservant ledit positionnement relatif déterminé obtenu lors de ladite étape de mise en référence desdits deux ensembles ; et
   - la mise en place d'organes de fixation annexes (76) dans lesdits trous de montage.

10. Procédé selon l'une quelconque des revendications 1 à 7, **caractérisé en ce qu'**il comporte les étapes successives suivantes,

   - une mise en référence préalable desdits deux ensembles (1a, 1b), prévue pour amener ces deux ensembles dans le positionnement relatif déterminé, lesdits deux ensembles ainsi positionnés formant conjointement ladite zone de recouvrement ;
   - le perçage de trous de montage à travers ladite zone de recouvrement, pour la fixation ultérieure de grille de perçage (34) ;

- le désassemblage des deux ensembles afin de réaliser un nettoyage et un ébavurage des panneaux au niveau desdits trous de montage ;

- ladite mise en référence desdits deux ensembles, prévue pour amener à nouveau ces deux ensembles dans le positionnement relatif déterminé permettant la réalisation du perçage desdits orifices, lesdits deux ensembles (1a, 1b) ainsi positionnés formant conjointement ladite zone de recouvrement (4) présentant une couche de mastic d'interposition entre lesdits deux panneaux de cette zone ;

- la mise en place d'un ou plusieurs seconds dispositifs de mise en pression (12) sur un second côté de ladite zone de recouvrement, opposé à un premier côté ;

- la fixation d'une ou plusieurs grilles de perçage (34) sur ladite zone de recouvrement (4), du premier côté de celle-ci, par l'intermédiaire de moyens de fixation provisoires (70) coopérant avec lesdits trous de montage (32) ;

- le perçage desdits orifices à travers ladite zone de recouvrement, depuis ledit premier côté de la zone de recouvrement, à l'aide de l'outil de perçage (40) destiné à coopérer avec chaque grille de perçage (34), chaque orifice étant réalisé à proximité d'au moins un second dispositif de mise en pression (12) ;

- la mise en place d'organes de fixation provisoires (70) chacun traversant l'un desdits orifices pratiqués dans ladite zone de recouvrement (4), ainsi que son orifice de centrage correspondant pratiqué sur la grille de perçage (34) ;

- le démontage de chaque grille de perçage, et desdits moyens de fixation provisoires (70) ;

- le démontage de chaque second dispositif de mise en pression (12) ;

- la mise en place desdits organes de fixation (74) dans leurs orifices respectifs (32), cette mise en place étant effectuée en conservant ledit positionnement relatif déterminé obtenu lors de ladite étape de mise en référence desdits deux ensembles ; et

- la mise en place d'organes de fixation annexes dans lesdits trous de montage.

**11.** Procédé selon l'une quelconque des revendications précédentes, **caractérisé en ce que** lesdits organes de fixation (74) sont des rivets.

**12.** Procédé selon l'une quelconque des revendications précédentes, **caractérisé en ce qu'**il s'applique pour l'assemblage d'ensembles de fuselage d'aéronef.

**13.** Procédé selon l'une quelconque des revendications précédentes, **caractérisé en ce qu'**il s'applique pour l'assemblage d'ensembles de fuselage d'aéronef, présentant une zone de recouvrement à double courbures.

**14.** Procédé selon l'une quelconque des revendications précédentes, **caractérisé en ce qu'**il est mis en oeuvre de sorte que les organes de fixation forment conjointement une couture dite orbitale.

**Claims**

**1.** Process for assembling two assemblies (1a, 1b) by means of multiple fastening devices (74) intended to create a junction between two panels (6, 8) which are at least partly superimposed and which belong respectively to the two assemblies and which together form an overlap zone (4), where the said process involves the drilling of multiple holes (32) through the overlap zone, where each of the holes is designed to house one of the said fastening components, where the drilling of each hole is achieved using a drilling tool (40) which passes through an associated centring hole (38) made in a drilling grid (34) securely fixed onto the overlap zone, where the said drilling tool includes a mandrel (51) for support on the overlap zone (4) as well as an expanding ring (56) fitting into the said mandrel over a conical contact surface (53) which, during the application of a relative movement along a central axis (48) of the contact surface between the said mandrel and the said ring, allows expansion of this ring to occur, ensuring that it is immobilised in the associated centring hole (38), **characterised by** the fact that the application of the said relative movement between the expanding ring (56) and the support mandrel (51) is achieved so that, following the immobilisation of the expanding ring in the said associated centring hole (38), it causes a displacement of the mandrel supported against the said overlap zone (4), through the associated centring hole (38) and along the central axis (48) of the conical contact surface (53) in the direction of this overlap zone, in order to exert a pressure on the latter.

**2.** Process according to claim 1. **characterised by** the fact that the application of the said relative movement between the expanding ring (56) and the support mandrel (51) is achieved so that it causes a displacement of the mandrel supported against the overlap zone and through the associated centring hole over a distance $(x2)$ which meets the condition (x2) > 0.90.(x), where (x) corresponds to a total distance for the relative movement applied between the ring and the mandrel.

3. Process according to claim 1 or claim 2, **characterised by** the fact that the application of the said relative movement between the expanding ring (56) and the support mandrel (51) is achieved so a.s to produce, at the end of the application, a pressure of the support mandrel on the said overlap zone (4) of between about 600 N and 1200 N.

4. Process according to any whatsoever of the preceding claims, **characterised by** the fact that the said drilling grid (34) is made of aluminium or one of its alloys, and by the fact that the expanding ring (56) made of steel.

5. Process according to any whatsoever of the preceding claims, **characterised by** the fact that the said drilling grid (34) is designed and arranged so that before the said application of the relative movement between the expanding ring and the support mandrel, when the drilling tool (40) is positioned with its support mandrel (51) through the associated centring hole and in contact with the overlap zone (4), the said expansion ring (56) emerges from either side of the said associated centring ring (38).

6. Process according to any whatsoever of the preceding claims, **characterised by** the fact that it includes a step for reference positioning of the said two assemblies (1a, 1b), intended to bring these two assemblies into a set relative position allowing drilling of the said holes to be carried out.

7. Process according to claim 1 or claim 6, **characterised by** the fact that drilling of the said holes and a later step for putting the said fastening components (74) in place in their respective holes (32) are carried out successively whilst maintaining the said set relative positioning achieved during the said step for reference positioning of the said two assemblies.

8. Process according to any whatsoever of the preceding claims, **characterised by** the fact that it includes the following successive steps, carried out whilst maintaining the said set relative positioning obtained during the said step for reference positioning of the two assemblies:

   - the fixing of one or more drilling grids (34) onto the said overlap zone (4), with each drilling grid being equipped with multiple centring holes (38);
   - drilling of the said holes (32) through the said overlap zone (4), using a drilling tool (4) designed to fit onto each drilling grid (34);
   - removal of each drilling grid;
   - the fitting in place of the said fastening components (74) in their respective holes.

9. Process according to any whatsoever of claims 1 to 7, **characterised by** the fact that it includes the following successive steps:

   - the said reference positioning of the said two assemblies (1a, 1b), intended to bring these two assemblies into the set relative positioning allowing drilling of the said holes (32) to be carried out, where the said two assemblies, thus positioned, which together form the said overlap zone (4), have a layer of interposition sealant between the said two panels (6, 8) of this zone;
   - putting in place one or more first devices for applying pressure (10) onto a first side of the said overlap zone and putting in place one or more second devices for applying pressure (12) onto a second side of the said overlap zone, opposite the first side;
   - drilling of assembly holes through the said overlap zone, for fixing the drilling grid, with each hole being made close to at least one first device for applying pressure and to at least one second device for applying pressure;
   - removal of each first device for applying pressure (10);
   - fixing of one or more drilling grids (34) onto the said overlap zone (4), on its first side, using temporary means of fixing (70) which fit into the said assembly boles;
   - drilling of said holes through the said overlap zone (4), from the said first side of the overlap zone using a drilling tool (40) designed to fit onto each drilling grid (34), where each hole is made close to at least one second device for applying pressure (12);
   - fitting in place of temporary fastening (70) components where each passes through one of the said holes made in the said overlap zone, as well as its associated centring hole mode in the drilling grid;
   - removal of each drilling grid and of the said temporary means of fastening (70);
   - removal of each second device for applying pressure (12);

- putting the said fastening components (74) in place in their respective holes (32), where this putting in place is achieved whilst maintaining the said set relative positioning achieved during the said step for reference positioning of the said two assemblies; and
- the fitting in place of subsidiary fastening components (76) in the said assembly holes.

**10.** Process according to any whatsoever of claims 1 to 7, **characterised by** the fact that it includes the following successive steps,

- the reference positioning beforehand of the said two assemblies, (1a 1b) intended to bring these two assemblies into the set relative positioning, where the said two assemblies, thus positioned, together form the said overlap zone;
- drilling of assembly holes through the said overlap zone, for subsequent fixing of the drilling grid (34);
- disassembly of the two assemblies in order to clean and de-burr the panels at the said assembly holes;
- the said reference positioning of the said two assemblies, intended to bring these two assemblies once more into the set relative positioning allowing drilling of the said holes to be carried out, where the said two assemblies (1a, 1b), thus positioned, which together form the said overlap zone (4), have a layer of interposition sealant between the said two panels of this zone;
- putting in place one or more second devices for applying pressure onto a second side of the said overlap zone (12), opposite a first side;
- fixing of one or more drilling grids (34) onto the said overlap zone (4), on its first side, using temporary means of fixing (70) which fit into the said assembly holes (32);
- drilling of said holes through the said overlap zone, from the said first side of the overlap zone using a drilling tool (40) designed to fit onto each drilling grid (34), where each hole is made close to at least one second device for applying pressure (12);
- fitting in place of temporary fastening components (70) where each passes through one of the said holes made in the overlap zone (4), as well as its associated centring hole mode in the drilling grid. (34);
- removal of each drilling grid and of the said temporary means of fastening (70);
- removal of each second device for applying pressure (12);
- putting the said fastening components (74) in place in their respective holes (32), where this putting in place is achieved whilst maintaining the said set relative positioning achieved during the said step for reference positioning of the said two assemblies; and
- the fitting in place of subsidiary fastening components in the said assembly holes.

**11.** Process according to any whatsoever of the preceding claims, **characterised by** the fact that the said fastening components (74) are rivets.

**12.** Process according to any whatsoever of the preceding claims, **characterised by** the fact that it applies to assembling aircraft fuselage assemblies.

**13.** Process according to any whatsoever of the preceding claims, **characterised by** the fact that it applies to assembling aircraft Fuselage assemblies which exhibit a double curvature overlap.

**14.** Process according to any whatsoever of the preceding claims, **characterised by** the fact that it is implemented in such a manner that the fastening components together form a so-called orbital seam.

**Patentansprüche**

**1.** Verfahren zum Zusammenbauen von zwei Anordnungen (1a, 1b) durch mehrere Befestigungselemente (74) zur Bildung einer Verbindung zwischen zwei sich zumindest partiell überlagernden Platten (6, 8), die zu jeweils einer der zwei Anordnungen gehören und gemeinsam eine Überdeckungszone (4) bilden, wobei das Verfahren das Bohren von mehreren Öffnungen (32) durch die Überdeckungszone umfasst, jede der Öffnungen zur Aufnahme von einem der Befestigungselemente dient, das Bohren jeder Öffnung mittels eines Bohrwerkzeugs (40) durchgeführt wird, das durch eine entsprechende Zentrierungsöffnung (38) hindurchgeht, die an einer fest an der Überdeckungszone angebrachten Bohrschablone (34) ausgeführt ist, wobei das Bohrwerkzeug ein Ansatzbohrfutter (51) an der Überdeckungszone (4) sowie einen expandierbaren Ring (56), der an dem Bohrfutter längs einer konischen Kontaktoberfläche (53) eng anliegt, umfasst, wodurch bei der Anwendung einer Relativbewegung längs einer Mittelachse (48) der konischen Kontaktoberfläche zwischen dem Bohrfutter und dem Ring eine Expansion dieses Rings ermöglicht wird, die dessen Blockierung in der entsprechenden Zentrierungsöffnung (38) gewährleistet, **dadurch gekennzeichnet, dass** die Anwendung der Relativbewegung zwischen dem expandierbaren Ring (56) und dem Ansatzbohrfutter (51) derart ausgeführt wird, dass infolge der Blockierung des expandierbaren Rings in der entsprechenden Zentrierungsöffnung (38) eine Verschiebung des Bohrfutters unter Ansetzen an der Überdeckungszone (4) durch die entsprechende Zentrierungsöffnung (38) und längs der Mittelachse (48) der konischen Kontaktoberfläche (53) in Richtung dieser Überdeckungszone erzeugt wird, so dass auf diese Druck ausgeübt wird.

2. Verfahren nach Anspruch 1, **dadurch gekennzeichnet, dass** die Anwendung der Relativbewegung zwischen dem expandierbaren Ring (56) und dem Ansatzbohrfutter (51) derart ausgeführt wird, dass eine Verschiebung des Bohrfutters unter Ansetzen an der Überdeckungszone (4) und durch die entsprechende Zentrierungsöffnung hindurch über eine Strecke $(x2)$, die die Bedingung $(x2) > 0,90. (x)$ erfüllt, wobei $(x)$ der Gesamtstrecke der angewandten Relativbewegung zwischen dem Ring und dem Bohrfutter entspricht, erzeugt wird.

3. Verfahren nach Anspruch 1 oder Anspruch 2, **dadurch gekennzeichnet, dass** die Anwendung der Relativbewegung zwischen dem expandierbaren Ring (56) und dem Ansatzbohrfutter (51) derart ausgeführt wird, dass am Ende der Anwendung ein Druck des Ansatzbohrfutters auf die Überdeckungszone (4), der zwischen etwa 600 und 1200 N liegt, erzeugt wird.

4. Verfahren nach einem der vorhergehenden Ansprüche, **dadurch gekennzeichnet, dass** die Bohrschablone (34) in Aluminium oder einer von dessen Legierungen ausgeführt ist und dass der expandierbare Ring (56) in Stahl ausgeführt ist.

5. Verfahren nach einem der vorhergehenden Ansprüche, **dadurch gekennzeichnet, dass** die Bohrschablone (34) derart gestaltet und angewandt wird, dass vor der Anwendung der Relativbewegung zwischen dem expandierbaren Ring und dem Ansatzbohrfutter, während das Bohrwerkzeug (40) derart positioniert ist, dass dessen Ansatzbohrfutter (41) durch die entsprechende Zentrierungsöffnung hindurchgeht und mit der Überdeckungszone (4) in Kontakt steht, der Expansionsring (56) von jeder Seite der entsprechenden Zentrierungsöffnung (38) vorkragt.

6. Verfahren nach einem der vorhergehenden Ansprüche, **dadurch gekennzeichnet, dass** es einen Schritt des Ausrichtens der beiden Anordnungen (1a, 1b) zum Herbeiführen einer bestimmten relativen Positionierung dieser beiden Anordnungen, die die Ausführung des Bohrens der Öffnungen ermöglicht, umfasst.

7. Verfahren nach Anspruch 1 oder Anspruch 6, **dadurch gekennzeichnet, dass** das Bohren der Öffnungen und ein letzter Schritt des Platzierens der Befestigungselemente (74) in deren jeweiligen Öffnungen (32) aufeinanderfolgend unter Beibehalten von deren bestimmter relativer Positionierung, die während des Schritts des Ausrichtens der zwei Anordnungen erhalten wurde, ausgeführt werden.

8. Verfahren nach einem der vorhergehenden Ansprüche, **dadurch gekennzeichnet, dass** es die folgenden aufeinanderfolgenden Schritte umfasst, die unter Beibehaltung der bestimmten relativen Positionierung, die während des Schritts des Ausrichtens der beiden Anordnungen erhalten wurde, ausgeführt werden:

   - Befestigung von einer oder mehreren Bohrschablonen (34) an der Überdeckungszone (4), wobei jede Bohrschablone mit mehreren Zentrierungsöffnungen (38) ausgestattet ist;
   - Bohren der Öffnungen (32) durch die Überdeckungszone (4) hindurch mittels des Bohrwerkzeugs (40), das zum Zusammenwirken mit jeder Bohrschablone (34) gedacht ist;
   - Abbauen von jeder Bohrschablone;
   - Platzieren der Befestigungselemente (74) in deren jeweiligen Öffnungen.

9. Verfahren nach einem der Ansprüche 1 bis 7, **dadurch gekennzeichnet, dass** es die folgenden aufeinanderfolgenden Schritte umfasst:

   - Ausrichten der zwei Anordnungen (1a, 1b) zum Herbeiführen einer bestimmten relativen Positionierung dieser beiden Anordnungen, die die Ausführung des Bohrens der Öffnungen (32) ermöglicht, wobei die beiden so positionierten Anordnungen gemeinsam die Überdeckungszone (4) bilden, die eine Klebstoffzwischenschicht zwischen den beiden Platten (6, 8) dieser Zone aufweist;
   - Platzieren von einer oder mehreren ersten Vorrichtungen zur Druckbeaufschlagung (10) an einer ersten Seite der Überdeckungszone und Platzieren von einer oder mehreren zweiten Vorrichtungen zur Druckbeaufschlagung (12) an einer zweiten Seite der Überdeckungszone, die zur ersten Seite entgegengesetzt ist;

- Bohren von Montagelöchern durch die Überdeckungszone hindurch zur Befestigung der Bohrschablone, wobei jedes Montageloch in der Nähe von mindestens einer ersten Vorrichtung zur Druckbeaufschlagung und von mindstens einer zweiten Vorrichtung zur Druckbeaufschlagung ausgeführt wird;

- Abbauen von jeder ersten Vorrichtung zur Druckbeaufschlagung (10);

- Befestigung von einer oder mehreren Bohrschablonen (34) an der Überdeckungszone (4) an der ersten Seite derselben durch provisorische Befestigungsmittel (70), die mit den Montagelöchern zusammenwirken;

- Bohren der Öffnungen durch die Überdeckungszone (4) hindurch von der ersten Seite der Überdeckungszone aus, mittels des Bohrwerkzeugs (40), das zum Zusammenwirken mit jeder Bohrschablone (34) gedacht ist, wobei jede Öffnung in der Nähe von mindestens einer zweiten Vorrichtung zur Druckbeaufschlagung (12) ausgeführt wird;

- Platzieren von provisorischen Befestigungselementen (70), die jeweils durch eine der in der Überdeckungszone ausgeführten Öffnungen sowie die in der Bohrschablone ausgeführte entsprechende Zentrierungsöffnung hindurchgehen;

- Abbauen der einzelnen Bohrschablonen (34) und der provisorischen Befestigungsmittel (70);

- Abbauen von jeder zweiten Vorrichtung zur Druckbeaufschlagung (12);

- Platzieren der Befestigungsmittel (74) in deren jeweiligen Öffnungen (32), wobei das Platzieren unter Beibehalten der bestimmten relativen Positionierung, die während des Schritts des Ausrichtens der beiden Anordnungen erhalten wurde, durchgeführt wird; und

- Platzieren von Befestigungszusatzelementen (76) in den Montagelöchern.

10. Verfahren nach einem der Ansprüche 1 bis 7, **dadurch gekennzeichnet, dass** es die folgenden aufeinanderfolgenden Schritte umfasst:

- Vorhergehendes Ausrichten der beiden Anordnungen (1a, 1b) zum Herbeiführen der bestimmten relativen Positionierung dieser beiden Anordnungen, wobei die beiden so positionierten Anordnungen gemeinsam die Überdeckungszone bilden;

- Bohren von Montagelöchern durch die Überdeckungszone hindurch zur späteren Befestigung der Bohrschablone (34);

- Auseirzanderbauen der beiden Anordnungen, um eine Reinigung und ein Entgraten der Platten auf der Ebene der Montagelöchern auszuführen;

- Ausrichten der beiden Anordnungen zum erneuten Herbeiführen der bestimmten relativen Positionierung dieser beiden Anordnungen, die die Durchführung des Bohrens der Öffnungen ermöglicht, wobei die so positionierten beiden Anordnungen (1a, 1b) gemeinsam die Überdeckungszone (4) bilden, die eine Kunststoffzwischenschicht zwischen den beiden Platten dieser Zone aufweist;

- Platzieren von einer oder mehreren zweiten Vorrichtungen zur Druckbeaufschlagung (12) an einer zweiten Seite der Überdeckungszone, die zur ersten Seite entgegengesetzt ist;

- Befestigen von einer oder mehreren Bohrschablonen (34) an der Überdeckungszone (4) an der ersten Seite hiervon durch provisorische Befestigungsmittel (70), die mit den Montagelöchern (32) zusammenarbeiten;

- Bohren der Öffnungen durch die Überdeckungszone hindurch, von der ersten Seite der Überdeckungszone aus, mittels des Bohrwerkzeugs (40), das zum Zusammenwirken mit jeder Bohrschablone (34) gedacht ist, wobei jede Öffnung in der Nähe von mindestens einer zweiten Vorrichtung zur Druckbeaufschlagung (12) ausgeführt wird;

- Platzieren von provisorischen Befestigungselementen (70), die jeweils durch eine der in der Überdeckungszone (4) ausgeführten Öffnungen sowie die in der Bohrschablone (34) ausgeführte entsprechende Zentrierungsöffnung hindurchgehen;

- Abbauen der einzelnen Bohrschablonen und der provisorischen Befestigungsmittel (70);

- Abbauen von jeder zweiten Vorrichtung zur Druckbeaufschlagung (12);

- Platzieren der Befestigungselemente (74) in deren jeweiligen Öffnungen (32), wobei dieses Platzierten unter Beibehaltung der bestimmten relativen Positionierung, die während des Schritts des Ausrichtens der beiden Anordnungen erhalten wurde, durchgeführt wird; und

- Platzieren von Befestigungszusatzelementen in den Montagelöchern.

11. Verfahren nach einem der vorhergehenden Ansprüche, **dadurch gekennzeichnet, dass** die Befestigungselemente (74) Nieten sind.

12. Verfahren nach einem der vorhergehenden Ansprüche, **dadurch gekennzeichnet, dass** es zum Zusammenbauen von Rumpfanordnungen eines Luftfahrzeugs verwendet wird.

**13.** Verfahren nach einem der vorhergehenden Ansprüche, **dadurch gekennzeichnet, dass** es zum Zusammenbauen von Rumpfanordnungen eines Luftfahrzeugs, die eine Überdeckungszone mit doppelter Krümmung aufweisen, verwendet wird.

**14.** Verfahren nach einem der vorhergehenden Ansprüche, **dadurch gekennzeichnet, dass** es derart durchgeführt wird, dass die Befestigungselemente gemeinsam eine sogenannte Orbitalnaht bilden.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

**EP 2 121 225 B1**

## RÉFÉRENCES CITÉES DANS LA DESCRIPTION

**Documents brevets cités dans la description**

- EP 0761345 A
- EP 0761351 A

- US 3203300 A
- EP 0336808 A